# FASCICULE DE BREVET EUROPEEN

(11) **EP 1 619 589 B1**
(45) Date de publication et mention de la délivrance du brevet: **26.12.2007**
(21) Numéro de dépôt: 05291450.4
(22) Date de dépôt: 05.07.2005
(51) Int. Cl.: G06F 13/28, G06F 12/10

(54) **Procédé de programmation d'un contrôleur de DMA dans un système sur puce et système sur puce associé**
Verfahren zur Programmierung einer System auf Chip DMA Steuerung, sowie ein System auf Chip dafür.
Method for programming a system on a chip DMA controller and system on a chip therefore.

(30) Priorité: 23.07.2004 FR 0408202
(43) Date de publication de la demande: 25.01.2006
(73) Titulaire: STMicroelectronics SA, 92120 Montrouge (FR)
(72) Inventeur: Martinez, Albert, 13320 Bouc Bel Air (FR); Orlando, William, 13790 Peynier (FR)
(74) Mandataire: Verdure, Stéphane

(56) Documents cités:
- EP-A- 0 589 664
- US-A- 5 659 798
- US-A- 5 708 849
- US-B1- 6 219 725
- US-B1- 6 615 292
- BLUMRICH M A ET AL: "Protected, user-level DMA for the SHRIMP network interface" HIGH-PERFORMANCE COMPUTER ARCHITECTURE, 1996. PROCEEDINGS., SECOND INTERNATIONAL SYMPOSIUM ON SAN JOSE, CA, USA 3-7 FEB. 1996, LOS ALAMITOS, CA, USA,IEEE COMPUT. SOC, US, 3 février 1996 (1996-02-03), pages 154-165, XP010162056 ISBN: 0-8186-7237-4

## Description

La présente invention concerne les systèmes intégrés sur silicium ou SoC (de l'anglais "System On Chip"), comprenant au moins une unité centrale de traitement ou CPU ("Central Processing Unit") sur laquelle des programmes peuvent s'exécuter, un contrôleur d'accès direct à la mémoire ou contrôleur de DMA ("Direct Memory Access"), une mémoire et une unité de gestion de mémoire ou MMU ("Memory Management Unit").

De tels SoC sont par exemple présents dans des appareils électroniques tels qu'un ordinateur à usage général, un boîtier décodeur ou "Set-Top-Box", un assistant numérique personnel ou PDA ("Personal Digital Assistant"), un téléphone portable etc.

La présente invention concerne plus précisément la programmation du contrôleur de DMA d'un tel SoC.

Dans la mémoire physique, un espace mémoire de taille variable est alloué dynamiquement à chaque programme d'application ou programme utilisateur. Plus spécifiquement, chaque programme utilisateur n'a accès qu'à une partie des pages de la mémoire physique. Ces pages forment un espace mémoire (éventuellement discontinu) qui est adressé au niveau du bus mémoire par des adresses physiques, mais qui est connu du programme utilisateur via un espace d'adressage (en général continu), dit espace d'adressage virtuel, auquel le programme accède avec des adresses virtuelles. L'espace d'adressage virtuel est propre au programme utilisateur. La relation qui lie les adresses virtuelles dans ledit espace d'adressage et les adresses physiques dans la mémoire physique est stockée sous la forme d'une table de traductions appelée table des pages, qui est gérée par le système d'exploitation et stockée dans la mémoire principale. Les dernières traductions d'adresses calculées par l'unité de rechargement de table de la MMU sont stockées dans une mémoire cache spécifique appelée TLB (TLB, de l'anglais "Translation Look-aside Buffer").

De façon connue, chaque entrée ("Entry" en anglais) de la TLB, i.e., chaque ligne correspondant à une traduction dans la TLB comprend un identificateur d'espace d'adressage (ou ASID, de l'anglais "Address Space IDentifier") afin de distinguer des adresses virtuelles identiques dans des espaces d'adressage différents. Chaque ASID est respectivement associé, de manière univoque, à un espace d'adressage déterminé du système.

Le contrôleur de DMA effectue des transferts de données entre la mémoire interne du SoC et des dispositifs mémoires périphériques (par exemple, des disques), à partir d'informations qui lui sont fournies. Ces informations comportent l'adresse physique de source du transfert, l'adresse physique de destination du transfert et enfin la taille de la zone mémoire à transférer.

Dans l'art antérieur, un programme requérant une programmation du contrôleur de DMA en vue d'un transfert DMA s'exécutant sur le SoC en mode utilisateur (appelé encore mode applicatif ou mode non-privilégié) fournit une adresse virtuelle, qui est l'adresse virtuelle de la source du transfert DMA ou de la destination du transfert DMA, au système d'exploitation ou OS ("Operating System"). L'OS, s'exécutant en mode privilégié (appelé encore mode superviseur ou mode noyau) prend alors la main, traduit l'adresse virtuelle fournie en une adresse physique correspondante. Il requiert successivement la mémorisation de l'adresse physique de source du transfert obtenue dans le registre de source, la mémorisation de l'adresse de destination dans le registre de destination et enfin la mémorisation de la taille dans le registre de taille, et ce à partir de l'adresse virtuelle des registres. L'OS supervise ensuite le transfert réalisé par le contrôleur de DMA à partir des informations figurant dans ses registres et avertit le programme initiateur de la requête, du résultat du transfert.

Les instructions de mémorisation utilisées généralement sont du type : "STORE pa_src@dma_src_reg_adr", "STORE pa_dest@dma_dest_reg_adr" et "STORE size@dma_size_reg_adr", où "pa_src" est l'adresse physique de source, "pa_dest" est l'adresse physique de destination, "size" est la taille de la zone mémoire transférée, "dma_src_reg_adr", "dma_dest_reg_adr" et "dma_size_reg_adr" sont respectivement les adresses virtuelles des registres de source, de destination et de taille. La première instruction ci-dessus signifie en langage naturel « mémoriser la donnée correspondant à l'adresse physique de source "pa_src" dans le registre d'adresse de source du contrôleur de DMA dont l'adresse virtuelle est "dma_src_reg_adr" ». Cette instruction fournit donc un argument d'adresse virtuelle "dma_src_reg_adr" et un argument de données "pa_src" à stocker à l'adresse fournie comme argument d'adresse.

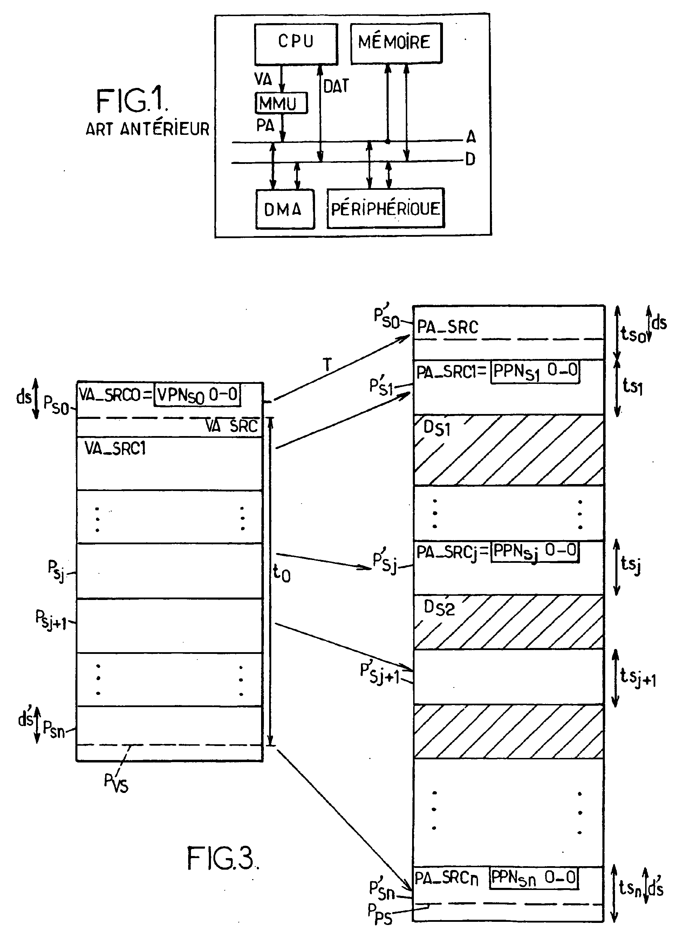

En référence à la figure 1 représentant schématiquement un exemple de SoC tel que considéré précédemment, le cheminement d'une programmation du contrôleur de DMA suivant l'art antérieur est le suivant : l'adresse virtuelle "dma_src_reg_adr" est appliquée par la CPU à destination de la MMU sur le bus d'adresses virtuelles VA. La MMU la traduit en adresse physique, vérifie les droits d'accès à cette adresse physique, puis l'applique sur le bus d'adresse physiques PA, par lequel elle est mise à disposition notamment du contrôleur de DMA sur le bus général A qui est relié à un ensemble d'entités comprenant par exemple des contrôleurs de disques, la mémoire physique etc.

En parallèle, l'adresse physique de source "pa_src" est appliquée par la CPU sur le bus de données DAT, à partir duquel elle est mise à disposition sur le bus général de données D, également relié à l'ensemble d'entités.

Les applications de l'adresse de source sur le bus général de données D et de l'adresse du registre de source sur le bus général d'adresses A sont réalisées en fonction du protocole retenu pour la gestion des bus. Suivant les protocoles de gestion de bus, l'adresse physique du registre de source est appliquée par exemple sur le bus général d'adresses A quasi-simultanément à l'application de l'adresse physique de source « pa_src » sur le bus général de données D, ou l'adresse du registre de source est positionnée sur le bus général d'adresses A un coup d'horloge avant le positionnement sur le bus général de données D de l'adresse physique de source (pour un protocole où les adresses sont positionnées un coup d'horloge avant les données correspondantes), ou encore l'une des applications est faite sur le front montant tandis que l'autre est faite sur front descendant etc.

La traduction est effectuée par la MMU à l'aide d'une table de traduction.

Plusieurs tentatives ont été récemment effectuées pour programmer le contrôleur de DMA directement par un programme s'exécutant en mode utilisateur, et non plus par l'OS. Ce besoin provient notamment de la proportion très importante du temps requis pour une programmation de contrôleur de DMA par l'OS, par rapport au temps du transfert lui-même des données opéré par le contrôleur de DMA.

Une des difficultés rencontrées provient du fait que les registres du contrôleur de DMA doivent être programmés avec des adresses physiques, alors que les programmes en mode utilisateur n'y ont pas accès et qu'il n'est pas souhaitable, notamment pour des raisons de sécurité, qu'ils y aient accès.

Différentes solutions sont proposées dans les documents « User-Level DMA without Operating System Kernel Modification », de Evangelos P. Markatos et Manolis G.H. Katevenis, Institute of Computer Science, Science and Technology Park of Crete, 1997 IEEE, « Protected User-Level DMA for the Shrimp Network Interface », de M.A. Blumrich et al., Proc of the 2nd International Symposium on High Performance Computer Architecture, pages 154-165, February 1996 et « Integration of Message Passing and Shared Memory in the Stanford Flash Multi-Processor », de J. Heinlein et al., Proc. Of the 6th International Conference on Architectural Support for Programming Languages and Operating Systems, pages 38-50, 1994.

Selon ces solutions, on réalise un adressage implicite (ou "shadow adressing"), basé sur l'instruction de mémorisation "STORE" et le préfixe 1. L'inconvénient de ces solutions est que l'espace mémoire adressable en pratique est réduit de moitié, ce qui est très pénalisant.

D'autres solutions sont présentées dans le document FR 0406666 (STMicroelectronics) qui présente l'avantage de perdre un espace mémoire adressable beaucoup moins important que les solutions évoquées précédemment.

Les solutions exposées dans les documents FR 0407763 déposé le 12 juillet 2004 et FR 0408084 déposé le 21 juillet 2004 (STMicroelectronics) n'entraînent aucune perte d'espace mémoire adressable en pratique.

Dans les systèmes sur puce de l'art antérieur où la programmation du contrôleur de DMA était pilotée par l'OS, la gestion des discontinuités présentes dans l'espace physique mémoire est gérée de manière logicielle directement par l'OS opérant en mode privilégié. L'OS ayant accès aux adresses physiques, cette gestion ne pose pas de problèmes particuliers.

Lorsque deux zones mémoires sont indiquées par deux adresses virtuelles consécutives correspondant à deux adresses physiques qui ne sont pas consécutives, il y a une discontinuité entre ces deux zones mémoires dans l'espace mémoire physique.

Les discontinuités apparaissent exclusivement dans l'espace mémoire physique. Il n'existe pas de discontinuité dans l'espace d'adressage virtuel.

Dans certains de ces systèmes sur puce, l'OS programme le contrôleur de DMA pour effectuer des transferts élémentaires qui ont lieu sur des morceaux de mémoire linéaires sans discontinuité. A la fin de chaque transfert élémentaire, le contrôleur de DMA génère une interruption pour indiquer la fin du transfert. L'OS le programme alors avec un nouveau morceau de mémoire linéaire et ainsi de suite jusqu'à avoir transféré la totalité de la zone mémoire à transférer définie par une application à l'origine du transfert global. Lorsque le dernier transfert élémentaire est terminé, le contrôleur de DMA envoie une interruption à l'OS qui informera ensuite l'application que celui est achevé.

Dans certains autres de ces systèmes sur puce connus, l'OS scanne une table de pages, de l'espace mémoire physique, génère des listes chaînées indiquant les discontinuités et fournit lors d'une programmation DMA, la liste chaînée pertinente au contrôleur de DMA, qui était adapté pour se programmer ensuite en fonction de cette liste chaînée (mécanisme de "scatter-gather") sans intervention de l'OS.

De telles techniques sont évoquées par exemple dans les documents US 5,708,849 (Coke et al.) ou encore EP 0 589 664 (IBM).

Dans les techniques permettant la programmation du contrôleur de DMA directement par un programme s'exécutant en mode utilisateur, et non plus par l'OS, indiquées ci-dessus, il n'est plus possible de mettre en oeuvre les solutions de l'art antérieur pour gérer les discontinuité, puisque l'OS n'est plus sollicité pour la programmation et que le programme utilisateur ne voit qu'un espace mémoire virtuel linéaire.

Le document US 6 615 292 décrit un appareil qui effectue des transferts de données entre un dispositif périphérique et la mémoire principale, programmable à l'aide d'adresses logiques de source relatives au périphérique et d'adresses physiques de destination dans la mémoire principale 200 et adapté pour repérer qu'une première et une deuxième adresses logiques de source successivement fournies ne sont pas consécutives.

La présente invention vise à proposer une solution de programmation du contrôleur de DMA pouvant être mise en oeuvre dans le cas d'une programmation effectuée directement par un programme utilisateur et qui permette de gérer les discontinuités apparaissant dans l'espace mémoire physique.

A cet effet, suivant un premier aspect, l'invention propose un procédé de programmation d'un contrôleur de DMA dans un système sur puce comprenant une unité centrale de traitement, une unité de gestion de mémoire adaptée pour traduire une adresse virtuelle en une adresse physique conformément à une table de traduction déterminée qui contient en outre la taille de chaque page, un module matériel de vérification de contiguïté, un contrôleur de DMA relié à un bus d'adresses et à un bus de données. Le contrôleur est programmable par application sur au moins un bus parmi le bus de données et le bus d'adresses, d'éléments de programmation comportant une adresse physique de source, une adresse physique de destination et une taille des données à transférer. Le système sur puce associe chaque programme utilisateur à un espace d'adressage virtuel et un espace mémoire physique, organisés en pages, et tels que chaque adresse comporte des bits de poids fort indiquant une page associée à ladite adresse.

Le procédé selon l'invention comprend les étapes suivantes mises en oeuvre sous la commande de l'unité centrale de traitement :
- en réponse à des instructions déterminées dédiées d'un programme utilisateur délivrant une information de taille et une adresse virtuelle de programmation parmi une adresse virtuelle de source et une adresse virtuelle de destination, ladite adresse virtuelle de programmation est fournie en entrée de l'unité de gestion de mémoire ;
- l'unité de gestion de mémoire traduit l'adresse virtuelle de programmation en une adresse physique de programmation correspondante ; et
- au moins un premier sous-bloc est constitué par un sous-espace mémoire sans discontinuité identifié par une adresse physique de début égale à l'adresse physique de programmation et une adresse physique de fin égale à l'adresse physique précédant immédiatement une première discontinuité dans une partie de l'espace mémoire physique correspondant, d'après la table de traduction, à la partie de l'espace adressable virtuel débutant à l'adresse virtuelle de programmation et de taille égale à l'information de taille délivrée par le programme utilisateur, la première discontinuité étant déterminée par le module de discontinuité en fonction d'informations fournies par l'unité de gestion de mémoire et stockées dans la table de correspondance ;
- au moins une partie des éléments de programmation destinés au contrôleur de DMA, est définie en fonction de ladite adresse physique de programmation et d'au moins le premier sous-bloc identifié ;
- et lesdits éléments de programmation sont délivrés au dit contrôleur de DMA par application sur au moins un bus parmi le bus d'adresses et le bus de données.

Suivant un second aspect, l'invention propose un système sur puce comprenant une unité centrale de traitement, une unité de gestion de mémoire adaptée pour traduire une adresse virtuelle en une adresse physique conformément à une table de traduction déterminée qui contient en outre la taille de chaque page, un module matériel de vérification de contiguïté, un contrôleur de DMA relié à un bus d'adresses et à un bus de données. Le contrôleur est programmable par application sur au moins un bus parmi le bus de données et le bus d'adresses, d'éléments de programmation comportant une adresse physique de source, une adresse physique de destination et une taille de données à transférer.

Le système sur puce selon l'invention comporte pour chaque programme utilisateur un espace d'adressage virtuel et un espace mémoire physique, organisés en pages, et tels que chaque adresse comporte des bits de poids fort indiquant une page associée à l'adresse.

Dans ce système sur puce, en réponse à des instructions déterminées dédiées d'un programme délivrant une information de taille et une adresse virtuelle de programmation parmi une adresse virtuelle de source et une adresse virtuelle de destination, l'unité de gestion de mémoire est adapté pour traduire l'adresse virtuelle de programmation en une adresse physique de programmation correspondante ; et
- le module matériel de vérification de contiguïté est adapté pour constituer au moins un premier sous-bloc d'espace mémoire sans discontinuité identifié par une adresse physique de début égale à l'adresse physique de programmation et une adresse physique de fin égale à l'adresse physique précédant immédiatement une première discontinuité dans une partie de l'espace mémoire physique correspondant, d'après la table de traduction à la partie de l'espace adressable virtuel débutant à l'adresse virtuelle de programmation et de taille égale à l'information de taille délivrée par le programme utilisateur, cette première localisation de discontinuité étant déterminée par le module de discontinuité en fonction d'informations fournies par l'unité de gestion de mémoire et contenues dans la table de traduction ;
   et le module de vérification de contiguïté est adapté pour définir au moins une partie des éléments de programmation destinés au contrôleur de DMA, en fonction de cette adresse physique de programmation et d'au moins le premier sous-bloc identifié ;
- et le système sur puce est adapté pour délivrer au dit contrôleur de DMA par application sur au moins un bus parmi le bus d'adresses et le bus de données lesdits éléments de programmation.

D'autres caractéristiques et avantages de l'invention apparaîtront encore à la lecture de la description qui va suivre. Celle-ci est purement illustrative et doit être lue en regard des dessins annexés sur lesquels :
- la figure 1 est une représentation d'un système sur puce de l'art antérieur ;
- la figure 2 représente un système sur puce dans un mode de réalisation de l'invention ;
- la figure 3 représente la configuration de la partie de source P_{VS} de l'espace adressable virtuel et de la partie de source P_{PS} correspondante dans l'espace mémoire physique selon un mode de réalisation de l'invention ;
- la figure 4 représente les différentes étapes d'un processus de détermination de discontinuité selon l'invention ;
- la figure 5 représente les différents éléments appliqués sur le bus de données BD et le bus d'adresses BA lors d'une programmation d'un contrôleur de DMA dans un mode de réalisation de l'invention.

On considère dans le mode de réalisation décrit ci-après un système sur une puce 1 associé à une architecture à 32 bits, telle qu'une adresse virtuelle se présente sous la forme d'un nombre formant adresse de page codée sur les bits de poids fort ou VPN (en anglais "Virtual Page Number"), suivie par un décalage (en anglais "offset ") dans ladite page, codé sur les bits de poids faible.

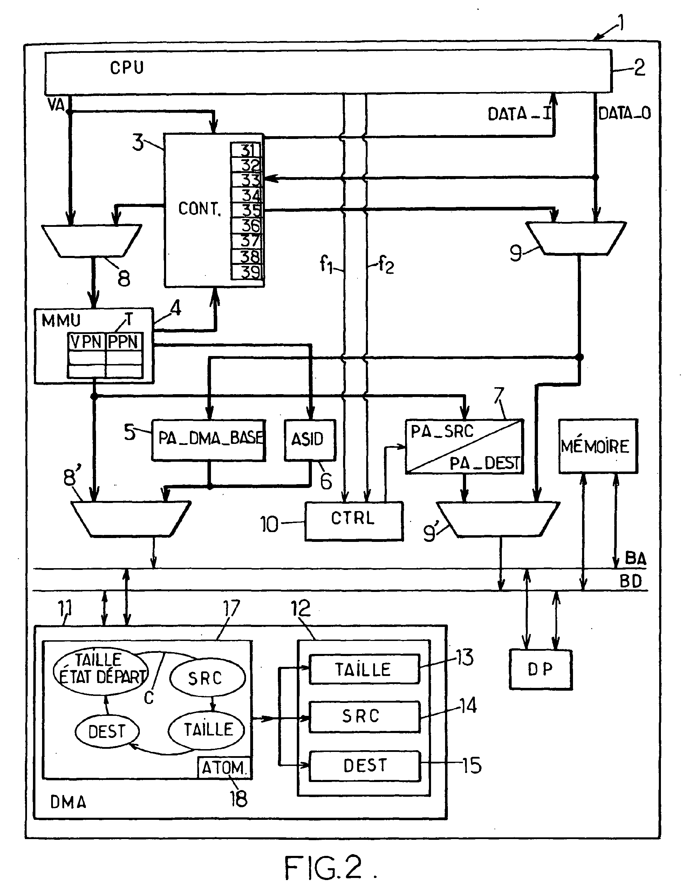

Le système sur puce 1 décrit en référence à la figure 2 et dans lequel l'invention est mise en oeuvre conformément au mode de réalisation décrit ici, ainsi que les instructions considérées ci-dessous dédiées à la programmation, correspondent à un mode de programmation similaire à celui exposé dans le document FR 0407763.

Toutefois l'invention peut être mise en oeuvre dans tout système sur puce permettant la programmation d'un contrôleur de DMA directement par un programme utilisateur. En particulier, il peut s'agir d'un système sur puce utilisant une technique de "shadow adressing", ou encore un système correspondant à ceux considérés dans les documents FR 0406666 ou FR 0408084.

Le système sur puce 1 représenté sur la figure 2 et correspondant à un mode de réalisation de l'invention, comprend une unité centrale de traitement ou CPU 2, sur laquelle s'exécutent des programmes utilisateurs.

Le système sur puce 1 comprend également un module matériel ("hardware") de vérification de contiguïté 3 comprenant un registre d'adresse de programmation 31, un registre de taille initiale 32, un registre de taille de sous-bloc source 33, un registre de taille de sous-bloc destination 33', un registre de première adresse virtuelle 34, un registre de première taille 35, un registre de première adresse physique 36, un registre de seconde adresse virtuelle 37, un registre de seconde taille 38 et un registre de seconde adresse physique 39.

Le système sur puce 1 comprend également une MMU 4, un registre d'ensemble 5, un registre d'identifiant 6, un registre tampon 7, quatre multiplexeurs 8, 8, 9' et 9" et un bloc de contrôle 10.

Le système sur puce 1 comprend en outre un contrôleur de DMA 11, qui comporte un ensemble 12 de registres requis pour effectuer la programmation du transfert DMA. Cet ensemble 12 de registres comprend un registre de taille 13, un registre de source 14 et un registre de destination 15. Ces registres 13, 14, 15 de taille, de source et de destination sont adaptés pour mémoriser des données de programmation comprenant respectivement la taille, l'adresse de source et l'adresse de destination, du transfert DMA à effectuer.

Le contrôleur de DMA 11 comprend également une machine d'états 17, adaptée pour sélectionner un registre de l'ensemble 12 et y mémoriser des données de programmation. La machine d'états 17 comporte en outre un registre d'atomicité 18.

La MMU 4 traduit, de façon connue, une adresse virtuelle de 32 bits qui lui est fournie en entrée, en réalisant la traduction uniquement des bits de plus fort poids indiquant la page. Elle traduit ainsi le VPN en numéro de page physique ou PPN (en anglais "Physical Page Number"), à l'aide d'une table T prédéterminée. La table de traduction T définit en outre la taille de la page physique indiquée par le PPN, ainsi qu'un espace d'adressage virtuel propre à chaque programme utilisateur à l'aide d'un ASID. La MMU 4 vérifie également que le programme utilisateur à l'origine de la traduction possède bien les droits correspondant à l'accès à la zone mémoire adressée par l'adresse virtuelle fournie en entrée.

Un bus d'adresses BA interconnecte le multiplexeur 8', le contrôleur de DMA 11, des dispositifs périphériques DP, une mémoire RAM etc.

De la même façon, un bus de données BD interconnecte le multiplexeur 9', le contrôleur de DMA 11, les dispositifs périphériques DP et la mémoire RAM.

Un bus d'adresses virtuelles VA comporte une branche reliant la CPU 2 à une entrée du multiplexeur 8.

Une autre branche du bus d'adresses virtuelles VA relie la CPU 2 au module de vérification de contiguïté 3.

Le bus d'adresses virtuelles VA est utilisé par la CPU 2 pour fournir à la MMU 4 via le multiplexeur 9 et le module de vérification de contiguïté 3, des adresses virtuelles dans le cadre de certaines instructions de programmation du contrôleur de DMA 11. Il est également utilisé par la CPU 2 pour fournir à la MMU 4 via le multiplexeur 8, des adresses virtuelles en-dehors de certaines instructions de programmation du contrôleur de DMA 11. Un bus de données de sortie DATA_O relie la CPU 2 au module de vérification de contiguïté 3 et au multiplexeur 9, qui est en outre relié au multiplexeur 9'.

Le multiplexeur 9 est en outre relié au module de vérification de contiguïté 3.

Le registre tampon 7 est relié au multiplexeur 9'.

Un bus de données d'entrée DATA_I relie le module de vérification de contiguïté 3 à la CPU 2. (En fait, les bus DATA_O et DATA_I peuvent être un même bus physique bidirectionnel)

L'entrée de la MMU 4 est reliée au multiplexeur 8.

La sortie de la MMU 4 est reliée avec le registre tampon 7, avec le registre d'identifiant 6 et avec le multiplexeur 8', qui est relié avec le registre d'identifiant 6 et le registre d'ensemble 5.

Le bloc de contrôle 10 est relié au bloc de vérification de contiguïté 3 et aux multiplexeurs 8, 8', 9 et 9' (liaisons non représentées sur la figure 2).

Le bloc de contrôle 10 commande ces multiplexeurs en fonction notamment d'instructions reçues par la CPU 2, pour constituer, à partir des éléments fournis en entrée aux multiplexeurs, des éléments de sortie.

Le bloc de contrôle 10 commande en outre le module de contiguïté 3 pour traiter des informations qui sont présentes sur le bus d'adresses VA ou sur le bus de données DATA_O, lorsque ces informations concernent des programmations de DMA.

L'ensemble 12 de registres du contrôleur de DMA 11 est associé à une sous-adresse physique de base PA_DMA_BASE, qui est une adresse de page, codée sur les bits de poids fort.

La machine d'états 17 du contrôleur de DMA 11 est adaptée pour, quand elle détecte la présence de la sous-adresse de base PA_DMA_BASE dans les bits de poids fort d'un mot M placé sur le bus d'adresses BA, sélectionner un registre déterminé parmi les registres 13, 14, 15 de l'ensemble 12 en fonction de l'état courant de la machine d'états 17 conformément à un cycle C ordonné d'états, qui comporte un état de départ de "taille", puis un état "source", puis un état de "taille", puis un état de "destination". La machine d'états 17 mémorise dans le registre sélectionné les données figurant alors sur le bus de données BD.

Dans le mode de réalisation qui va maintenant être décrit en référence à la figure 2, la machine d'états 17 est adaptée pour capturer, avant de sélectionner effectivement le registre sur l'adresse duquel elle pointe, dans un mot M appliqué sur le bus d'adresses BA et comportant en bits de poids fort la sous-adresse PA_DMA_BASE, les 8 bits suivant ladite sous-adresse et codant l'ASIDp du programme utilisateur.

Si la machine d'états 17 est dans l'état de départ, ces 8 bits sont mémorisés dans le registre d'atomicité 18. La machine d'états 17 pointant alors sur le registre de taille 13, elle sélectionne ledit registre de taille 13 et y mémorise les données alors appliquées sur le bus de données BD.

Si la machine d'états 17 pointe sur le registre de taille 13 en-dehors de l'état de départ, sur le registre de source 14 ou le registre de destination 15, les 8 bits extraits du mot M appliqué sur le bus BA sont comparés à ceux présents dans le registre d'atomicité 18.

Si ils ne sont pas égaux, la sélection du registre pointé n'est pas réalisée et les données placées sur le bus de données BD ne sont pas mémorisées.

Si ils sont égaux, le registre pointé est sélectionné et la mémorisation des données appliquées sur le bus BD s'effectue dans le registre sélectionné.

Un programme utilisateur P s'exécute sur la CPU 2 pour effectuer une opération de programmation du contrôleur de DMA 11 à l'aide d'une adresse virtuelle de source VA_SRC de 32 bits, d'une adresse virtuelle de destination VA_DEST de 32 bits et d'une taille t0 de zone mémoire à transférer.

Comme indiqué précédemment, l'adresse VA_SRC est un nombre comportant des bits de poids fort VPN_{S0} indiquant une page virtuelle P_{S0} et comportant des bits de poids faible indiquant un décalage d_{S} dans la page virtuelle P_{S0}.

L'adresse indiquée par la somme de l'adresse VA_SRC et de la taille t0 est un nombre comportant des bits de poids fort VPN_{Sn} indiquant une page virtuelle P_{Sn} et comportant des bits de poids faible indiquant un décalage d_{S}' dans la page P_{Sn}.

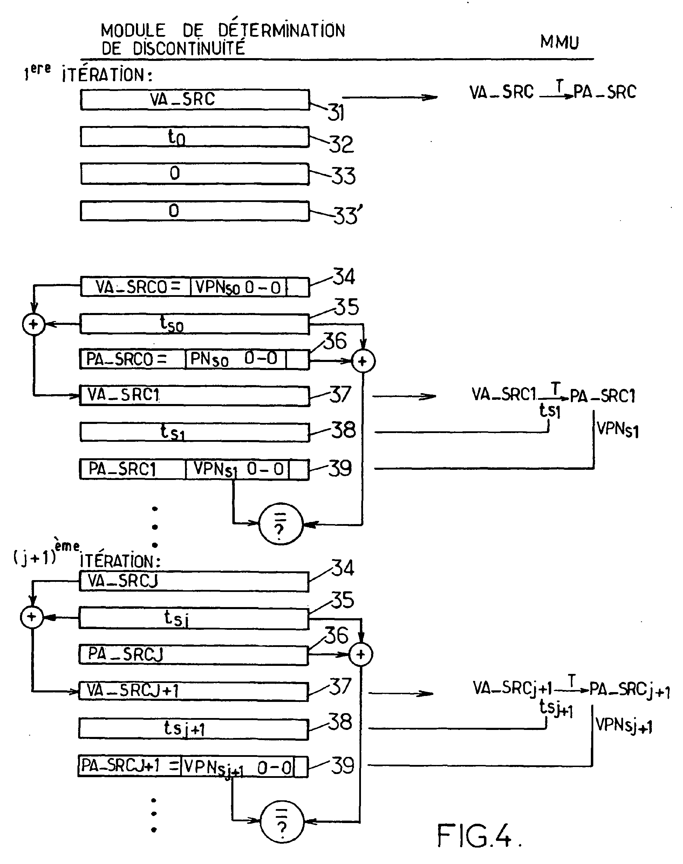

L'adresse virtuelle de source et la taille t0 définissent une partie de source P_{VS} de l'espace adressable virtuel, représentée sur la figure 4, qui est localisée entre l'adresse virtuelle VA_SRC et l'adresse virtuelle indiquée par la somme de l'adresse VA_SRC et de la taille t0. La partie Pvs s'étend sur n pages virtuelles P_{S0},..., P_{Sn} contiguës associées respectivement à leur numéro VPN : VPN_{S0},..., VPN_{Sn}.

La partie P_{VS} comprend les zones mémoires de la page P_{S0} dont l'adresse comporte des bits de poids fort égaux à VPN_{S0} et dont le décalage est supérieur ou égal au décalage d_{S}. La partie P_{VS} comprend la totalité des pages P_{S1} à P_{Sn-1} et comprend les zones mémoires de la page P_{Sn} dont l'adresse comporte des bits de poids fort égaux à VPN_{Sn} et dont le décalage est inférieur ou égal au décalage d_{S}'.

Chaque page P_{Si |i=1 à n} correspond à une page physique P'_{Si} associée à un numéro PPN respectif (PPN_{Si |i=1 à n}) dans l'espace mémoire physique. Chaque numéro PPN_{Si} est déterminé par la table de traduction T à partir du numéro VPN_{Si.}

La table de traduction T contient en outre la taille t_{Si} de chaque page physique P'_{Sn}.

La partie P_{VS} de l'espace adressable virtuel correspond ainsi à une partie de source P_{PS} de l'espace mémoire physique. Cette partie P_{PS} de l'espace mémoire physique comprend les zones mémoires de la page P'_{S0} dont l'adresse comporte des bits de poids fort égaux à PPN_{S0} et dont le décalage est supérieur ou égal au décalage d_{S}. La partie P_{PS} comprend la totalité des pages P'_{S1} à P'_{Sn-1} associées respectivement aux numéros PPN_{S1} à PPN_{Sn-1,} et comprend les zones mémoires de la page P'_{Sn} dont l'adresse comporte des bits de poids fort égaux à PPN_{Sn} et dont le décalage est inférieur ou égal au décalage ds'.

Ces pages physiques peuvent ne pas être situées de manière contiguë dans l'espace mémoire physique.

Dans le mode de réalisation décrit ici, la partie P_{PS} de l'espace mémoire physique présente un nombre kₛ de discontinuités entre pages physiques.

Par exemple, comme illustré en figure 3, les pages P'_{S0} et P'_{S1} sont contiguës tandis qu'une première discontinuité D_{S1} figure entre les pages P'_{S1} et P'_{S2}, qu'une deuxième discontinuité D_{S2} figure entre les pages P'_{Sj} et P'_{Sj+1}, etc.

De la même façon, l'adresse virtuelle de destination VA_DEST comporte des bits de poids fort égaux à VPN_{D0} indiquant la page virtuelle P_{D0} et comporte des bits de poids faible indiquant un décalage d_{D} dans la page P_{D0}.

L'adresse égale à la somme de l'adresse VA_DEST et de la taille t0 comporte des bits de poids fort égaux à un numéro VPN_{Dm} indiquant la page virtuelle P_{Dm} et comporte des bits de poids faible indiquant un décalage d_{D}' dans la page P_{Dm}.

L'adresse virtuelle de destination et la taille t0 définissent une partie P_{VD} de l'espace adressable virtuel qui est localisé entre l'adresse virtuelle VA_DEST et l'adresse virtuelle indiquée par la somme de l'adresse VA_DEST et de la taille t0. La partie P_{VD} s'étend sur m pages virtuelles P_{D0},..., P_{Dm} contiguës de numéro VPN respectifs VPN_{D0},..., VPN_{Dm}.

La partie P_{VD} comprend les zones mémoires de la page P_{D0} dont l'adresse comporte des bits de poids fort égaux à VPN_{D0} et dont le décalage est supérieur ou égal au décalage d_{D}. La partie P_{VD} comprend la totalité des pages P_{D1} à P_{Dm-1} et comprend les zones mémoires de la page P_{Dm} dont l'adresse comporte des bits de poids fort égaux à VPN_{Dm} et dont le décalage est inférieur ou égal au décalage d_{D}'.

Chaque page P_{Di |i=1 à m} correspond à une page physique P'_{Di} associée à un numéro PPN respectif (PPN_{Di |i=1 à m}) dans l'espace mémoire physique. Chaque numéro PPN_{Di} est déterminé par la table de traduction T à partir du numéro VPN_{Di}.

La table de traduction T contient en outre la taille t_{Di} de chaque page physique P'_{Di}.

La partie P_{VD} de l'espace adressable virtuel correspond ainsi à une partie P_{PD} de l'espace mémoire physique. Cette partie P_{PD} de l'espace mémoire physique est constituée de la partie de la page P'_{D0} au-delà du décalage d_{D}, de la totalité des pages P'_{D1} à P'_{Dm-1} et comprend la partie de la page P'_{Dm} en deçà du décalage d_{D}'.

La partie P_{PD} de l'espace mémoire physique présente k_{D} discontinuités entre pages physiques.

Le programme utilisateur P comporte deux séquences successives Seq1 et Seq2 de chacune au moins deux instructions qui vont s'exécuter successivement.

Chaque séquence Seq1 ou Seq2 comporte chacune les instructions suivantes, avec des arguments respectifs :
- l'instruction "Translate" (instruction "T"), dont le format est "Translate (argVA ; argD)" où "argVA" est un argument d'adresse virtuelle et "argD" est un argument de données, permet notamment de traduire l'adresse virtuelle fournie en argument d'adresse, en adresse physique correspondante et de stocker cette adresse physique dans le registre tampon 7 ;
- instruction "StoreDMA" (instruction "S"), dont le format est "StoreDMA argVA " où "argVA" est un argument d'adresse virtuelle, permet notamment d'appliquer l'adresse physique stockée dans le registre tampon 7 sur le bus de données BD.

La première séquence Seq1 comporte :
"Translate (VA_SRC ; t0)" (instruction "T1"), puis :
   "StoreDMA VA_SRC" (instruction "S1").

La seconde séquence Seq2 comporte :
"Translate (VA_DEST ; t0)" (instruction "T2"), puis :
   "StoreDMA VA_DEST" (instruction "S2").

La CPU 2 est adaptée pour, lors de l'exécution de l'instruction Translate par un programme utilisateur, placer l'argument d'adresse virtuelle fourni (ici VA_SRC) sur le bus VA, placer l'argument de données fourni (ici t0) sur le bus DATA_O et mettre au niveau haut le fil f1.

Les registres de taille de sous-bloc source 33, et de taille de sous-bloc destination 33' sont mis à zéro.

Suite à la mise au niveau haut du fil f1, le bloc de contrôle 10 commande le module de vérification de contiguïté 3 pour qu'il mémorise l'adresse virtuelle VA_SRC appliquée sur le bus d'adresse VA dans le registre d'adresse de programmation 31, et la taille de transfert t0 appliquée sur le bus de données DATA_O dans le registre de taille initiale 32.

En parallèle, l'adresse virtuelle VA_SRC est fournie au multiplexeur 8, qui est commandé par le bloc de contrôle 10 pour la délivrer à la MMU 4.

La MMU 4 traduit l'argument d'adresse virtuelle fourni VA_SRC en adresse physique PA_SRC.

La traduction par la MMU 4 est effectuée en déterminant à l'aide de la table de traduction T et à partir du numéro VPN_{S0} de la page virtuelle P_{S0} indiquée par l'adresse virtuelle VA_SRC, le numéro PPN_{S0} de la page physique P'so correspondante.

La table de traduction T définit également la taille t₀ de la page physique P'so.

La MMU 4 fournit au module de vérification de contiguïté 3 la taille t_{S0} et le numéro PPN_{S0}. Le module de vérification de contiguïté 3 mémorise la taille t_{S0} dans le registre 35 de première taille. Il détermine l'adresse physique PA_SRC0 du début de la page P'_{S0}, qui comporte en bits de poids fort le numéro PPN_{S0} et en bits de poids faible un décalage nul et la mémorise dans le registre 36 de première adresse physique.

Le module de vérification de contiguïté 3 détermine par ailleurs à partir de l'adresse virtuelle VA_SRC reçue préalablement, l'adresse virtuelle VA_SRC0 correspondant au début de la page P_{S0} et l'enregistre dans le registre 34 de première adresse virtuelle de page. Cette adresse virtuelle VA_SRC0 comporte des bits de poids fort égaux à VPN_{S0} et un décalage nul.

Puis, une fois ces registres de première adresse virtuelle 34, première adresse physique 36 et première taille 35 ainsi renseignés, le processus suivant, représenté en figure 4, est engagé : le module de vérification de contiguïté 3 détermine une adresse virtuelle VA_SRC1 en sommant ladite taille t_{S0} mémorisée dans le registre 35 de première taille de page et l'adresse virtuelle VA_SRC0 mémorisée dans le registre 34 de première adresse virtuelle. Il enregistre l'adresse virtuelle VA_SRC1 dans le registre 37 de seconde adresse virtuelle. Cette adresse virtuelle VA_SRC1 est l'adresse du début de la page P_{S1} qui suit la page P_{S0} dans la partie d'espace virtuel adressable P_{VS}. Cette adresse virtuelle VA_SRC1 comporte en bits de poids fort le numéro VPN_{S1}.

Le module de vérification de contiguïté 3 délivre l'adresse virtuelle VA_SRC1 mémorisée dans le registre 37 de seconde adresse virtuelle au multiplexeur 8, qui est commandé par le bloc de contrôle 10 pour la délivrer à la MMU 4.

La MMU 4 traduit l'adresse virtuelle fournie VA_SRC1 en adresse physique PA_SRC1 comportant le numéro PPN_{S1} en bits de poids fort, à l'aide de la table de traduction T et à partir du numéro VPN_{S1} de la page virtuelle indiquée par l'adresse virtuelle VA_SRC1.

La table de traduction T définit également la taille t_{S1} de la page physique P'_{S1}.

La MMU 4 fournit la taille t_{S1} et le numéro PPN_{S1} au module de vérification de contiguïté 3. Le module de vérification de contiguïté 3 mémorise la taille t_{S1} dans le registre 38 de seconde taille.

Puis il détermine l'adresse physique PA_SRC1 correspondant à l'adresse du début de la page P'_{S1}, qui comporte en bits de poids fort le numéro PPN_{S1} et un décalage nul. Il mémorise l'adresse physique PA_SRC1 dans le registre 39 de seconde adresse physique.

Le module de vérification de contiguïté 3 somme la taille t_{S0} et l'adresse physique PA_SRC0, et compare l'adresse obtenue avec l'adresse physique PA_SRC1.

Si elles sont égales, alors on ajoute la taille t_{S0} au nombre mémorisé dans le registre de sous-bloc source 33. Puis on remplace l'adresse virtuelle VA_SRC0 mémorisée dans le registre 34 de première adresse virtuelle par l'adresse virtuelle VA_SRC1, mémorisée dans le registre 37 de seconde adresse virtuelle, l'adresse physique PA_SRC0 dans le registre 36 de première adresse physique par l'adresse physique PA_SRC1 mémorisée dans le registre 39 de seconde adresse physique et la taille t_{S0} mémorisée dans le registre de première taille 35 par la taille t_{S1} mémorisée dans le registre de seconde taille 38.

Et on réitère ce processus jusqu'à déterminer une inégalité lors d'une étape de comparaison, ou jusqu'à ce que l'étape de comparaison aboutisse à la vérification de l'égalité entre d'une part l'adresse physique PA_SRCn (adresse de début de la page P'_{Sn}) et d'autre part la somme de la taille t_{Sn-1} et de l'adresse physique PA_SRCn-1 (adresse de début de la page P'_{Sn-1}). Dans ce dernier cas, cela signifie qu'aucune discontinuité n'a été détectée.

Lorsqu'une première inégalité est déterminée entre d'une part la somme de la taille t_{Sj} mémorisée dans le registre 35 de première taille et l'adresse physique PA_SRCj du début de la page P'_{Sj} mémorisée dans le registre 36 de première adresse physique et avec d'autre part l'adresse physique PA_SRCj+1 du début de la page P'_{Sj+1} mémorisée dans le registre 39 de seconde adresse physique, elle indique la présence d'une première discontinuité D_{S1} située entre les pages physiques P'_{Sj} et P'_{Sj+1}.

Le registre 38 de seconde taille contient alors la taille t_{Sj+1} de la page P'_{Sj+1}, le registre 34 de première adresse virtuelle contient alors l'adresse virtuelle VA_SRCⱼ du début de la première page P_{Sj} et le registre 37 de seconde adresse virtuelle contient l'adresse virtuelle PA_SRCⱼ₊₁ du début de la première page P_{Sj+1}.

Lorsqu'une inégalité comme indiquée ci-dessus a été détectée, un premier sous-bloc SB_{S1}, ne présentant pas de discontinuité, est déterminé par le module 3. Il débute à l'adresse physique PA_SRC et se termine à la fin de la page physique P'_{Sj}.

Le module de vérification de contiguïté 3 détermine la taille t_{BS1} correspondant au dit premier sous-bloc SB_{S1}, à partir du décalage dₛ indiqué par l'adresse VA_SRC mémorisée dans le registre d'adresse de programmation 31 et de la somme des tailles de pages mémorisée dans le registre de taille de sous-bloc source 33.

La taille t_{BS1} ainsi obtenue est mémorisée dans ce registre 33.

Ainsi dans l'exemple de configuration de pages représenté en figure 4, après avoir constaté une première égalité lors de la première réalisation du processus, le module de vérification de contiguïté 3 va déterminer une adresse virtuelle VA_SRC2 en sommant ladite taille t_{S1} et l'adresse virtuelle VA_SRC1. Cette adresse virtuelle VA_SRC2 est l'adresse du début de la page P_{S2} qui suit la page P_{S1} dans la partie d'espace virtuel adressable P_{VS}. Cette adresse virtuelle VA_SRC2 comporte en bits de poids fort le numéro VPN_{S2}.

Puis le module de vérification de contiguïté 3 délivre l'adresse virtuelle VA_SRC2 au multiplexeur 8, qui est commandé par le bloc de contrôle 10 pour la délivrer à la MMU 4.

La MMU 4 traduit l'adresse virtuelle fournie VA_SRC2 en adresse physique PA_SRC2 comportant le numéro PPN_{S2} en bits de poids fort, à l'aide de la table de traduction T et à partir du numéro VPN_{S2} de la page virtuelle indiquée par l'adresse virtuelle VA_SRC1.

La table de traduction T définit également la taille t_{S2} de la page physique P'_{S2}.

La MMU 4 fournit la taille t_{S2} et le numéro PPN_{S2} au module de vérification de contiguïté 3.

Celui-ci détermine l'adresse physique PA_SRC2 correspondant à l'adresse du début de la page P'_{S2}, qui comporte en bits de poids fort le numéro PPN_{S2} et un décalage nul.

Le module de vérification de contiguïté 3 somme la taille t_{S1} et l'adresse physique PA_SRC1, et compare l'adresse obtenue avec l'adresse physique PA_SRC2.

Elles ne sont pas égales. La première discontinuité est ainsi mise en évidence par le module de vérification de contiguïté 3, entre les pages P'_{S1} et P'_{S2}.

Le premier sous-bloc sans discontinuité commence ainsi à l'adresse physique PA_SRC et se termine à la fin de la page P'_{S1}.

En parallèle de ce processus itératif de vérification de contiguïté déroulé par le module 3, les étapes décrites ci-dessous sont réalisées.

La MMU 4 fournit l'adresse physique PA_SRC au registre tampon 7 pour mémorisation. Elle extrait en outre de la table de traduction T l'ASID_{P} identifiant le programme utilisateur P dont provient l'instruction T1 et le fournit au registre d'identifiant 6 pour mémorisation. Dans l'exemple décrit ici, les ASID sont codés sur 8 bits.

Puis un mot Mₜ₁ comprenant des bits de poids forts égaux à la sous-adresse de base PA_DMA_BASE suivis par des bits codant l'identifiant ASID_{P} fourni par la MMU 4 suite à la traduction de VA_SRC, est constitué et fourni en entrée du multiplexeur 8'.

Le bloc de contrôle 10 est adapté pour, en réponse à la mise à l'état haut du fil f1, commander les multiplexeurs 9 et 9' de façon à ce que les données (la taille t0) fournies alors par la CPU 2 soient appliquées sur le bus de données BD. Il est adapté en outre pour commander le multiplexeur 8' de façon à ce que le mot Mₜ₁ soit appliqué sur le bus d'adresses BA.

Les applications sur les bus BA et BD sont effectuées sous le contrôle du bloc de contrôle 10 à des moments respectifs liés par rapport à l'autre (par exemple quasi-simultanément, ou l'un un coup d'horloge avant l'autre, etc.) et en fonction du protocole de gestion des bus retenu.

La machine d'états 17 du contrôleur de DMA 11 est initialement dans son état de départ d'une programmation de transfert DMA et pointe donc sur le registre de taille 13. Quand elle détecte la sous-adresse PA_DMA_BASE dans les bits de poids fort du mot Mₜ₁ appliqué sur le bus d'adresse BA, elle extrait les huit bits suivant ladite sous-adresse, lesquels codent l'ASID_{P}, et les mémorise dans le registre d'atomicité 18. Puis elle sélectionne le registre de taille 13 et y effectue la mémorisation des données (la taille t0) alors appliquées sur le bus de données BD. Elle déplace son pointeur de façon à pointer sur le registre de source 14 conformément au cycle C de la machine d'états 17.

Lors de l'exécution de la seconde instruction S1 "StoreDMA VA_SRC" de la séquence Seq1 par le programme utilisateur P, la CPU 2 place l'argument d'adresse virtuelle fourni (ici VA_SRC) sur le bus VA et met au niveau haut le fil f2. Le multiplexeur 8 reçoit l'adresse virtuelle VA_SRC et est commandé par le bloc de contrôle 10 pour fournir ladite adresse à la MMU 4.

La MMU 4 traduit l'argument d'adresse virtuelle fourni VA_SRC en adresse physique PA_SRC conformément à la table T, qui contient également l'ASID_{P} propre au programme utilisateur P. La MMU 4 fournit ainsi l'ASID_{P} qui identifie le programme utilisateur P dont provient l'instruction S1. Cet identifiant est ensuite comparé à l'identifiant mémorisé dans le registre d'identifiant 6, qui a été déterminé à partir de la première instruction T1 reçue par la CPU 2.

S'ils sont égaux, un mot M_{SRC} comprenant des bits de poids forts égaux à la sous-adresse PA_DMA_BASE mémorisée dans le registre d'ensemble 5, suivis par des bits codant l'identifiant ASID_{P} fourni par la MMU suite à la traduction de VA_SRC effectuée après réception de l'instruction S1, est constitué et fourni en entrée du multiplexeur 8'.

Par ailleurs, s'ils sont égaux, on fournit au multiplexeur 9' le contenu du registre tampon 7 ayant en mémoire l'adresse physique de source PA_SRC mémorisée lors du traitement de l'instruction T1 par le bloc de traitement de l'instruction d'adresse 3.

Et le multiplexeur 9', respectivement le multiplexeur 8', est commandé par le bloc de contrôle 10 pour permettre l'application sur le bus de données BD, de l'adresse physique PA_SRC provenant du registre tampon 7, respectivement l'application du mot M_{SRC} sur le bus d'adresses BA, conformément à la ligne relative à l'instruction S1 de la figure 3.

La machine d'états 17 du contrôleur de DMA 11 pointe alors sur le registre de source 14. Quand elle détecte la sous-adresse PA_DMA_BASE dans les bits de poids fort du mot M_{SRC} appliqué sur le bus d'adresse BA, elle extrait les huit bits suivant la sous-adresse de base et correspondant à l'identifiant ASID_{P}, et les compare à l'identifiant mémorisé dans le registre d'atomicité 18.

Si les identifiants sont égaux, elle sélectionne le registre de source 14 et y mémorise la donnée PA_SRC appliquée sur le bus de données BD. Elle déplace ensuite son pointeur de façon à pointer sur le registre de taille 13, conformément au cycle C de la machine d'états 17.

Au cas où la machine d'états 17 détecte une inégalité entre l'identifiant mémorisé dans le registre d'atomicité 18 et l'identifiant présent dans les mots M_{DEST} et M_{SRC}, une information d'échec est retournée à la CPU 2 lors d'une opération (non détaillée ici) de fourniture d'un statut relatif à l'opération de programmation du contrôleur de DMA.

Le traitement de la première séquence Seq1 pour la programmation du contrôleur de DMA 11 est ainsi achevé. La seconde séquence Seq2 est ensuite exécutée.

De la même façon que détaillé précédemment à partir de l'instruction T1 "Translate (VA_SRC ; t0)", lors de l'exécution de l'instruction T2 ("Translate (VA_DEST ; t0) ") par le programme utilisateur P, la CPU 2 place l'argument d'adresse virtuelle fourni (ici VA_DEST) sur le bus VA, place l'argument de données fourni (ici la taille t0) sur le bus DATA_0 et met au niveau haut le fil f1.

Le module de vérification de contiguïté va déterminer une première discontinuité D_{D1} et par conséquent un premier sous-bloc SB_{D1} ne présentant pas de discontinuité, en utilisant les registres 31, 32 et 34 à 39. En revanche, le registre de taille de sous-bloc destination 33' est utilisé à la place du registre de taille de sous-bloc source 33.

Le premier sous-bloc SB_{D1} débute à l'adresse virtuelle VA_DEST fourni par le programme P et a une taille t_{BD1} mémorisée dans le registre de taille de sous-bloc destination 33'.

Une fois le premier sous bloc de source SB_{S1} et ce premier sous-bloc de destination SB_{D1} déterminés, le module de vérification de contiguïté 3 compare les tailles t_{BS1} et t_{BD1} mémorisées respectivement dans le registre de taille de sous-bloc source 33 et le registre de taille de sous-bloc destination 33', sélectionne la plus petite taille t_{B1} = min (t_{BS1} ; t_{BD1}) et l'applique en entrée du multiplexeur 9. La taille t_{B1} est la taille d'un sous-bloc élémentaire telle que lors du transfert de ce sous-bloc élémentaire le contrôleur de DMA ne rencontrera de discontinuité ni dans l'espace mémoire source P_{PS}, ni dans l'espace mémoire destination P_{PD}.

En parallèle, une fois que la MMU 4 a traduit l'argument d'adresse virtuelle VA_DEST fourni par le programme P en adresse physique PA_DEST conformément à la table T, qui définit également l'ASID_{P} propre au programme utilisateur P, elle fournit l'adresse physique PA_DEST au registre tampon 7 pour mémorisation. Elle fournit en outre l'ASID_{P}, qui identifie le programme utilisateur P dont provient l'instruction T2, au registre d'identifiant 6 pour mémorisation.

Puis un mot Mₜ₂ comprenant des bits de poids forts égaux à la sous-adresse PA_DMA_BASE mémorisée dans le registre d'ensemble 5, suivis par des bits codant l'identifiant ASID_{P} fourni par la MMU suite à la traduction de VA_DEST est constitué et fourni en entrée du multiplexeur 8'.

En réponse à la mise à l'état haut du fil f1, le bloc de contrôle 10 est adapté pour commander le multiplexeur 9 de façon à ce que la donnée de taille t_{B1} fournie en entrée par le module de vérification de contiguïté 3 soit délivrée au multiplexeur 9'. Le bloc de contrôle 10 est en outre adapté pour commander le multiplexeur 9' de façon à ce que la donnée t_{B1} fournie en entrée soit appliquée par le multiplexeur 9' sur le bus de données BD et pour commander le multiplexeur 8' de façon à ce que le mot Mₜ₂ soit appliqué sur le bus d'adresses BA, comme représenté sur la figure 3.

La machine d'états 17 du contrôleur de DMA 11 pointe alors sur le registre de taille 13, conformément au cycle C. Quand elle détecte la sous-adresse PA_DMA_BASE dans les bits de poids fort du mot Mₜ₂ appliqué sur le bus d'adresse BA, elle extrait les huit bits suivant la sous-adresse de base et correspondant à l'identifiant ASID_{P} et les compare à l'identifiant mémorisé dans le registre d'atomicité 18.

S'ils sont égaux, elle sélectionne le registre de taille 13 et mémorise la taille t_{B1}, qui figure sur le bus de données BD.

La machine d'états 17 incrémente ensuite son pointeur de façon à pointer sur le registre de destination 15 conformément au cycle C.

Lors de l'exécution de l'instruction S2 ("StoreDMA VA_DEST") par le programme utilisateur P, la CPU 2 place l'argument d'adresse virtuelle fourni (ici VA_DEST) sur le bus VA et met au niveau haut le fil f2.

L'adresse virtuelle VA_DEST est ensuite délivrée par le multiplexeur 8 à la MMU 4.

La MMU 4 traduit l'adresse virtuelle fournie VA_DEST en adresse physique PA_DEST conformément à la table T, qui définit également l'ASID_{P} propre au programme utilisateur P. La MMU 4 fournit l'ASIDp qui identifie le programme utilisateur P dont provient l'instruction S2. L' ASID_{P} est ensuite comparé à l'identifiant mémorisé dans le registre d'identifiant 6 qui a été déterminé à partir de l'instruction T2 reçue par la CPU 2.

S'ils sont égaux, un mot M_{DEST} comprenant des bits de poids forts égaux à la sous-adresse de base PA_DMA_BASE mémorisée dans le registre d'ensemble 5, suivis par des bits codant l'identifiant ASID_{P} fourni par la MMU suite à la traduction de VA_DEST en réponse à l'instruction S2, est constitué et fourni en entrée du multiplexeur 8'.

Par ailleurs si les identifiants sont égaux, on fournit le contenu du registre tampon 7 ayant en mémoire l'adresse physique de source PA_DEST au multiplexeur 9'.

Et comme dans la première séquence Seq1, le multiplexeur 9', respectivement le multiplexeur 8', est commandé par le bloc de contrôle 10 pour permettre l'application sur le bus de données BD de l'adresse physique PA_DEST provenant du registre tampon 7, respectivement l'application du mot M_{DEST} sur le bus d'adresses BA, conformément à la ligne relative à l'instruction S2 de la figure 4.

La machine d'états 17 du contrôleur de DMA 11 pointe alors sur le registre de destination 15. Quand elle détecte la sous-adresse PA_DMA_BASE dans les bits de poids fort du mot M_{DEST} appliqué sur le bus d'adresse BA, elle extrait les huit bits suivant la sous-adresse de base et correspondant à l'identifiant ASID_{P} et les compare à l'identifiant mémorisé dans le registre d'atomicité 18.

Si les identifiants sont égaux, elle sélectionne le registre de destination 15 et y mémorise la donnée PA_DEST alors appliquée sur le bus de données BD. Puis elle incrémente ensuite son pointeur conformément au cycle C de la machine d'états 17 et retourne alors à l'état de départ du cycle C.

Le traitement de la séquence Seq2 pour la programmation du contrôleur de DMA 11 est ainsi achevé.

Le contrôleur de DMA est à présent programmé avec les données de source PA_SRC, de taille t_{B1} du sous-bloc élémentaire et de destination PA_DEST et va réaliser le transfert DMA.

La taille t_{B1} ainsi déterminée et fournie au contrôleur de DMA est telle qu'aucune discontinuité entre pages physiques tant dans la partie de source P_{PS} que de destination P_{PD} ne va être rencontrée par le contrôleur de DMA lors du transfert.

Dans le mode de réalisation considéré ici, le module de vérification de contiguïté 3 compare en outre la taille t0 délivrée initialement par le programme utilisateur P avec la taille t_{B1} qu'il a déterminée et fournie au contrôleur de DMA. Au cas où elles sont différentes, le module de contiguïté envoie à la CPU 2 par l'intermédiaire du bus de données DATA_I, un message d'information contenant la taille du transfert t_{B1} effectivement délivrée au contrôleur de DMA 11 ou contenant la localisation des discontinuités D_{S1} et D_{D1} déterminés, afin que le programme utilisateur P puisse reprogrammer le transfert des éléments qui n'ont pu être transférés suite à l'exécution des deux séquences d'instructions Seq1 et Seq2 décrites ci-dessus.

L'utilisation des identifiants (ici de l'ASID relatif au programme utilisateur P qui a généré l'instruction) permet de vérifier l'atomicité des instructions qui se succèdent. Cette disposition permet de repérer l'insertion d'une instruction provenant d'un programme utilisateur P' différent du programme utilisateur P et de ne pas mélanger les informations nécessaires au transfert DMA. Cela permet de renforcer la sécurité du système contre les tentatives d'accès frauduleux à la mémoire externe via des accès DMA. De plus, lorsque le contrôleur de DMA est un contrôleur multi-canaux, c'est-à-dire apte à renseigner en parallèle plusieurs ensembles de registres du type de l'ensemble 12, l'identifiant permet en outre de sélectionner le registre de taille, le registre source, le registre destination ou le registre statut, dans l'ensemble qui concerne le programme P.

Dans un autre mode de réalisation permettant de garantir l'atomicité des éléments de transfert sans avoir à comparer un identifiant (par exemple l'ASID) stocké dans un registre (ici le registre 6) à un identifiant déterminé par la MMU depuis un nouvel argument d'adresse, le système sur puce est adapté pour provoquer la sauvegarde des contenus des registres 5, 6, 7 et 31 à 39 à chaque changement de contexte (ie. à chaque changement de programme utilisateur).

Dans un autre mode de réalisation, le module de vérification de contiguïté 3 est adapté pour, lorsqu'il reçoit la première instruction de programmation du contrôleur de DMA en provenance du programme utilisateur P, sélectionner une page mémoire P_{blocs} d'adresse physique PA_BLOCS dans l'espace mémoire physique propre au programme P, et y enregistrer la première adresse physique PA_SRC0 déterminée lors de l'exécution du processus.

Puis une fois qu'il a déterminé un premier sous-bloc de source SB_{S1} avec une taille t_{BS1}, le module de vérification de contiguïté 3 enregistre dans cette page mémoire P_{blocs} à la suite des données y figurant déjà, la taille du premier sous-bloc de source t_{BS1} déterminée.

Puis le module de vérification de contiguïté 3 réitère le processus de détermination de sous-blocs à partir de l'endroit où il s'est arrêté pour déterminer t_{B1} jusqu'à comparer l'adresse physique PA_SRCₙ, de la façon détaillée ci-dessous.

Une fois qu'une nouvelle discontinuité située entre les pages P'_{Sj} et P'_{Sj+1} est déterminée, le module de vérification de contiguïté 3 remet le contenu du registre de taille de sous-bloc source 33 à zéro. Puis comme précédemment, il remplace le contenu du registre de première taille 35 par celui (tₛⱼ₊₁) du registre de seconde taille 38, le contenu du registre 36 de première adresse physique par celui (PA_SRCⱼ₊₁) du registre 39 de seconde adresse physique et le contenu du registre 34 de première adresse virtuelle par celui (VA_SRCⱼ₊₁) du registre 39 de seconde adresse virtuelle, et réitère le processus jusqu'à détecter une nouvelle inégalité ou parvenir à la fin de la partie P_{PS}. Il mémorise la taille du nouveau sous-bloc déterminé suite à la détection de la nouvelle discontinuité, puis l'adresse physique PA_SRCⱼ₊₁ contenue dans le registre 36 de première adresse physique dans la page mémoire P_{blocs} à la suite des données y figurant déjà.

Un nombre kₛ de sous-blocs sont ainsi détectés dans la partie P_{PS} de l'espace mémoire physique.

On obtient donc, une fois que les (kₛ +1) sous-blocs séparés par les discontinuités dans la partie P_{PS} de l'espace mémoire physique ont été isolés, une page mémoire P_{blocs} contenant les adresses et les tailles de ces différents sous-blocs.

De même, en déroulant les mêmes étapes à partir de l'adresse virtuelle de destination fournie par le programme utilisateur P par l'instruction « T2 », on détecte un nombre (k_{D+1}) de sous-blocs séparés par k_{D} discontinuités dans la partie P_{PD} de l'espace mémoire physique, et la page mémoire P_{blocs} contient en outre l'ensemble des informations relatives à l'adresse et à la taille de ces (k_{D+1}) sous-blocs.

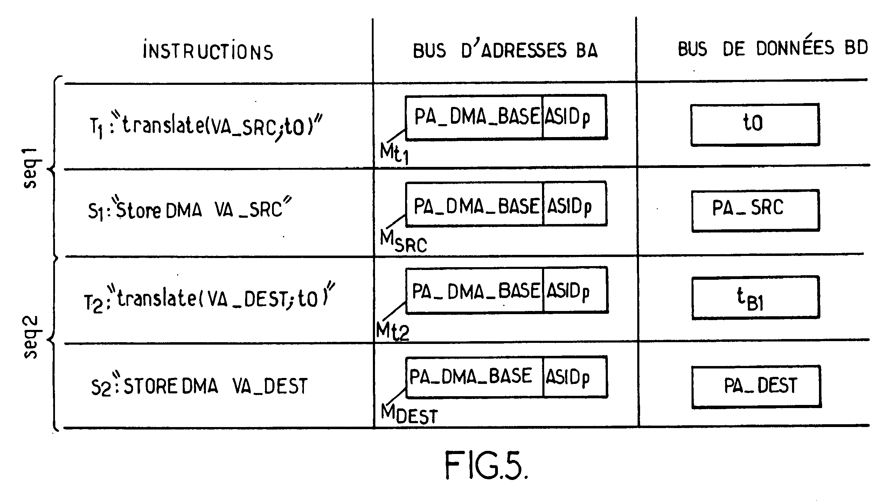

Dans ce mode de réalisation, il n'est pas besoin d'envoyer au contrôleur de DMA les mots Mₜ₁, M_{SRC}, Mₜ₂ et M_{DEST} sur le bus d'adresses BA, ni d'envoyer les données t0, t_{B1}, PA_SRC et PA_DEST sur le bus de données BD (cf figure 5). En effet, toutes ces informations sont présentes dans la page P_{blocs}.

Dans ce mode de réalisation, on envoie au contrôleur de DMA 11 le numéro PPN de la page mémoire P_{blocs} par exemple en l'appliquant sur le bus d'adresses BA ou sur le bus de données BD après l'exécution de l'instruction S2.

Il n'est alors plus nécessaire de stocker l'ASID dans un registre du contrôleur de DMA, ni de procéder aux comparaisons d'ASID puisque chaque programme utilisateur aura sa propre page mémoire P_{blocs} attachée. Il n'y aura donc plus de problèmes d'atomicité au niveau du contrôleur de DMA.

Dans ce mode de réalisation, le contrôleur de DMA est adapté pour, à la réception de ce numéro PPN, récupérer dans la page P_{blocs} les données relatives aux tailles et aux positions des différents sous-blocs dans la partie de source P_{PS} et dans la partie de destination P_{PD} et pour exécuter le transfert en fonction des discontinuités ainsi repérées.

Ce contrôleur de DMA est par exemple adapté d'un contrôleur de DMA de type scatter-gather de l'art antérieur. Un tel contrôleur de DMA n'inclut plus de machine d'état puisqu'il est capable de s'autoprogrammer avec les listes chaînées présentes dans la page P_{blocs}.

Ce mode de réalisation permet de programmer le transfert initialement commandé par le programme utilisateur P sans avoir, comme dans le premier mode de réalisation détaillé ci-dessus, à solliciter le programme utilisateur pour rejouer un jeu d'instructions de programmation lorsqu'une discontinuité a été rencontrée.

Il a été décrit ci-dessus la génération de deux listes de discontinuités : l'une relative aux discontinuités présentes dans la partie source P_{PS}, l'autre relative aux discontinuités présentes dans la partie destination P_{PD} de l'espace mémoire physique.

Dans ce cas, le contrôleur de DMA doit être adapté pour déterminer la taille des transferts successifs à effectuer sur des sous-blocs élémentaires continus, à partir de ces deux listes définies dans la page mémoire P_{blocs,} de telle manière que sur ces sous-blocs élémentaires, aucune discontinuité ne sera rencontré tant au niveau de la partie de source P_{PS} que de la partie de destination P_{PD} (par exemple à partir des tailles t_{BS1} et t_{BD1}, il déterminera une taille t_{B1}=min(t_{BS1}, t_{BD1}) de premier sous-bloc de transfert élémentaire).

Dans une variante, le module de contiguïté extrait de ces deux listes de discontinuité, une unique liste définissant d'office ces sous-blocs élémentaires permettant un transfert élémentaire du contrôleur de DMA, et ce sans rencontrer de discontinuité. Cette unique liste est stockée dans la page mémoire P_{blocs} (à la place des deux listes initiales) dont l'adresse est fournie au contrôleur de DMA.

Dans les deux modes de réalisation principaux décrits ci-dessus (détermination d'une taille t_{B1} de sous-bloc élémentaire transmise au contrôleur de DMA / élaboration d'une page mémoire P_{blocs} avec la définition de sous-blocs, et transmission de l'adresse de la page au contrôleur de DMA), il a d'abord été recherché une ou des discontinuités sur la partie de source P_{PS} à partir des éléments de taille t0 et de l'adresse virtuelle de source VA_SRC. Puis il a été recherché une ou des discontinuités sur la partie de destination P_{PD} à partir des éléments de taille t0 et de l'adresse virtuelle de destination VA_DEST.

Dans une variante, on fournit les trois paramètres VA_SRC, VA_DEST et t0 au module de discontinuité qui traite successivement une page de l'espace de source P_{S}, puis une page de l'espace de destination P_{PD}, pour déterminer la présence d'au moins une discontinuité.

De la sorte, en appliquant cette variante au premier mode de réalisation, la taille t_{B1} du premier sous-bloc élémentaire de transfert est déterminée immédiatement (sans avoir à sélectionner une taille minimum entre la taille du premier sous-bloc de source et du premier sous-bloc de destination.

Et dans le cas de l'application de la variante au second mode de réalisation, on obtient immédiatement une unique liste de sous-blocs élémentaires, ayant été déterminés en fonction des discontinuités présentes à la fois dans la partie source P_{PS} et dans la partie destination P_{PD}, sur lesquels le contrôleur de DMA peut programmer ses transferts.

L'invention permet ainsi de gérer les problèmes de discontinuité de l'espace mémoire physique dans le cadre de programmations de DMA non supervisées par l'OS. Elle fait appel à l'unité de gestion de mémoire, et offre la garantie que le programme utilisateur à l'origine de la programmation DMA ne manipule pas les adresses physiques, ce qui offre une bonne protection contre les actes de piratage. Elle permet en outre de bonnes performances en terme de rapidité de traitement.

L'ensemble des modes de réalisation décrits ci-dessus permet également que le programme utilisateur P programmant le contrôleur de DMA n'ait pas accès aux adresses des registres du contrôleur de DMA, ce qui assure un niveau de protection contre les violations d'accès à la mémoire.

## Revendications

1. Procédé de programmation d'un contrôleur de DMA dans un système sur puce (1) comprenant une unité centrale de traitement (2), une unité (4) de gestion de mémoire adaptée pour traduire une adresse virtuelle en une adresse physique conformément à une table de traduction (T) déterminée qui contient en outre la taille de chaque page, un module matériel de vérification de contiguïté (3), un contrôleur de DMA (11) relié à un bus d'adresses (BA) et à un bus de données (BD), ledit contrôleur étant programmable par application sur au moins un bus parmi le bus de données et le bus d'adresses, d'éléments de programmation comportant une adresse physique de source, une adresse physique de destination et une taille des données à transférer, le système sur puce associant chaque programme utilisateur à un espace d'adressage virtuel et un espace mémoire physique, organisés en pages, et tels que chaque adresse comporte des bits de poids fort indiquant une page associée à ladite adresse, ledit procédé comprenant les étapes suivantes mises en oeuvre sous la commande de l'unité centrale de traitement :
- en réponse à des instructions déterminées dédiées (T1, T2, S1, S2) d'un programme utilisateur (P) délivrant une information de taille (t0) et une virtuelle de programmation parmi une adresse virtuelle de source et une adresse virtuelle de destination (VA_SRC,VA_DEST), ladite adresse virtuelle de programmation est fournie en entrée de l'unité de gestion de mémoire ;
- l'unité de gestion de mémoire traduit l'adresse virtuelle de programmation en une adresse physique de programmation (PA_SRC,PA_DEST) correspondante ; et
- au moins un premier sous-bloc (SB_{S1}, SB_{D1}) est constitué par un sous-espace mémoire sans discontinuité identifié par une adresse physique de début (PA_SRC0) égale à l'adresse physique de programmation et une adresse physique de fin égale à l'adresse physique précédant immédiatement une première discontinuité (D_{S1}, D_{D1}) dans une partie de l'espace mémoire physique (P_{PS}, P_{PD}) correspondant, d'après la table de traduction (T), à la partie de l'espace adressable virtuel (P_{VS}, P_{VD}) débutant à l'adresse virtuelle de programmation et de taille égale à l'information de taille délivrée par le programme utilisateur (t0), ladite première discontinuité étant déterminée par le module de discontinuité en fonction d'informations (PPN₀, tₛ₀) fournies par l'unité de gestion de mémoire et stockées dans la table de traduction (T), et étant identifié là où deux adresses physiques de programmation, correspondant à deux adresses virtuelles de programmation successives, sont non successives ;
- au moins une partie des éléments de programmation (t_{B1}) destines au contrôleur de DMA, est définie en fonction de ladite adresse physique de programmation et d'au moins le premier sous-bloc identifié ;
- et lesdits éléments de programmation sont délivrés au dit contrôleur de DMA par application sur au moins un bus parmi le bus d'adresses (BA) et le bus de données (BD).

2. Procédé de programmation d'un contrôleur de DMA selon la revendication 1, selon lequel:
- le module de vérification de contiguïté (3) détermine une première adresse virtuelle (VA_SRCO), qui est l'adresse du début de la page virtuelle (P_{S0}) indiquée par l'adresse virtuelle de programmation (VA_SRC) ;
- une valeur de taille (t_{S0}) égale à la taille de la page (P'_{S0}) associée à l'adresse physique de programmation (PA_SRC) fournie par l'unité de gestion de mémoire après traduction de l'adresse virtuelle de programmation est déterminée ; et
- un premier groupe de bits (PPN_{S0}) de l'adresse physique de programmation indiquant ladite page physique (P'_{S0}) et la taille de page associée (t_{S0}) sont délivrés au module de vérification de contiguïté ; ledit procédé comprenant en outre les étapes suivantes :
a) ledit module de vérification de contiguïté détermine en fonction du premier groupe de bits une première adresse physique (PA_SRC0) qui est l'adresse du début de la page physique indiquée, détermine une seconde adresse virtuelle (VA_SRC1) égale à la somme de la première adresse virtuelle délivrée et de la première taille de page délivrée et fournit ladite seconde adresse virtuelle à l'unité de gestion de mémoire
b) l'unité de gestion de mémoire traduit ladite deuxième adresse virtuelle en une adresse physique correspondante (PA_SRC1) et détermine une deuxième valeur de taille (t_{S1}) égale à la taille de la page associée à ladite adresse physique;
c) un second groupe de bits (PPN_{S1}) de l'adresse physique correspondant à la traduction de la deuxième adresse virtuelle et indiquant la page physique (P'_{S1}) associée et la deuxième valeur de taille sont délivrés au module de vérification de contiguïté ;
d) le module de vérification de contiguïté détermine en fonction du second groupe de bits une seconde adresse physique (PA_SRC1) qui est l'adresse du début de la page physique indiquée (P'_{S1}), compare ladite seconde adresse physique à la somme de la première adresse physique (PA_SRCO) et de la première valeur de taille (t_{S0}) pour détecter au moins une inégalité entre la seconde adresse physique et ladite somme ;
et les étapes a) à d) sont réitérées en remplaçant la première adresse virtuelle par la seconde adresse virtuelle, la première taille de page par la deuxième taille de page et la première adresse physique par la deuxième adresse physique, au moins tant que la seconde adresse physique est égale à la somme de la première adresse physique et de la première valeur de taille de page ;
- quand une première inégalité est établie, elle indique une première discontinuité, et le premier sous-bloc (SB_{S1}) est constitué par l'espace mémoire sans discontinuité compris entre d'une part, l'adresse physique (PA_SRC) obtenue par traduction de l'adresse virtuelle (VA_SRC) de programmation délivrée par lesdites instructions et d'autre part, l'adresse physique égale à la somme, détectée inégale à la seconde adresse physique, de la première adresse physique et de la première valeur de taille de page.

3. Procédé de programmation d'un contrôleur de DMA selon l'une quelconque des revendications précédentes, selon lequel en réponse aux instructions déterminées dédiées d'un programme utilisateur (P) délivrant une première adresse virtuelle de programmation égale à l'adresse virtuelle de source (VA_SRC) et une seconde adresse virtuelle de programmation égale à l'adresse virtuelle de destination (VA_DEST) :
- on constitue d'une part un premier sous-bloc de source (SB_{S1}) et un premier sous-bloc de destination (SB_{D1}), présentant des tailles de sous-blocs respectives (t_{BS1}, t_{BD1})
- les éléments de programmation fournis au contrôleur de DMA comprennent l'adresse physique de source, l'adresse physique de destination et une taille de transfert (t_{B1}) égale à la taille de sous-bloc la plus petite parmi la taille du sous-bloc de source et la taille du sous-bloc de destination.

4. Procédé de programmation d'un contrôleur de DMA selon l'une quelconque des revendications précédentes, selon lequel une information est en outre envoyée au programme utilisateur, ladite information comportant au moins une donnée parmi une localisation dans l'espace mémoire virtuel de la première discontinuité et la taille de transfert délivrée au contrôleur de DMA si ladite taille est différente de la taille fournie par le programme utilisateur.

5. Procédé de programmation d'un contrôleur de DMA selon l'une quelconque des revendications 1 à 3, selon lequel
- on constitue un groupe de sous-blocs de source, respectivement de destination, chaque sous-bloc étant constitué par un sous-espace mémoire compris entre deux bornes adjacentes de source, respectivement de destination, lesdites bornes de source, respectivement de destination, étant :
- les adresses physiques de source, respectivement de destination, délivrées par le programme utilisateur,
- des adresse physiques déduites des localisations des discontinuités déterminées dans la partie de source (P_{PS}), respectivement de destination (P_{DS}), de l'espace mémoire physique,par le module de discontinuité (3) en fonction d'informations (PPN_{Si}, PPN_{Di}, t_{Si}, t_{Di}) fournies par l'unité de gestion de mémoire, et
- l'adresse physique égale à la traduction par l'unité de gestion de mémoire de la somme de l'adresse virtuelle de source, respectivement de destination, et de l'information de taille (t0) délivrées par le programme utilisateur (P), chaque sous-bloc étant associé à une adresse physique de début de sous-bloc et à une taille de sous-bloc ;
- on mémorise dans une page donnée (P_{blocs}) associée à une adresse physique de page, des données déterminées en fonction desdites adresses physiques de début dé bloc et des tailles de sous-bloc associées au groupe de sous-blocs de source, respectivement de destination ; et
- les éléments de programmation délivrés au dit contrôleur de DMA par application sur les bus d'adresses (BA) et de données (BD) comportent ladite adresse physique de page ;
- et le contrôleur de DMA se programme en fonction des données mémorisées dans ladite page.

6. Système sur puce (1) comprenant une unité centrale de traitement (2), une unité (4) de gestion de mémoire adaptée pour traduire une adresse virtuelle en une adresse physique conformément à une table de traduction (T) déterminée qui contient en outre la taille de chaque page, un module matériel de vérification de contiguïté (3), un contrôleur de DMA (11) relié à un bus d'adresses (BA) et à un bus de données (BD), ledit contrôleur étant programmable par application sur au moins un bus parmi le bus de données et le bus d'adresses, d'éléments de programmation comportant une adresse physique de source, une adresse physique de destination et une taille de données à transférer ;
ledit système sur puce comportant pour chaque programme utilisateur (P) un espace d'adressage virtuel et un espace mémoire physique, organisés en pages, et tels que chaque adresse comporte dés bits de poids fort indiquant une page associée à ladite adresse, et dans lequel en réponse à des instructions déterminées dédiées (T1, T2, S1, S2) d'un programme utilisateur (P) délivrant une information de taille (t0) et une adresse virtuelle de programmation parmi une adresse virtuelle de source et une adresse virtuelle de destination (VA_SRC,VA_DEST) :
- l'unité de gestion de mémoire est adapté pour traduire l'adresse virtuelle de programmation en une adresse physique de programmation (PA_SRC,PA_DEST) correspondante ; et
- le module matériel de vérification de contiguïté (3) est adapté pour constituer au moins un premier sous-bloc (SB_{S1}, SB_{D1}) d'espace mémoire sans discontinuité identifié par une adresse physique de début (PA_SRC0) égale à l'adresse physique de programmation et une adresse physique de fin égale à l'adresse physique précédant immédiatement une première discontinuité (D_{S1}, D_{D1}) dans une partie de l'espace mémoire physique (P_{PS}, P_{PD}) correspondant, d'après la table de traduction (T) à la partie de l'espace adressable virtuel (P_{VS}, P_{VD}) débutant à l'adresse virtuelle de programmation et de taille égale à l'information de taille délivrée par le programme utilisateur (t0), ladite première localisation de discontinuité étant déterminée par le module de discontinuité en fonction d'informations (PPN₀, tₛ₀) fournies par l'unité de gestion de mémoire et contenues dans la table de traduction (T), et étant identifiée là où deux adresses physiques de programmation, correspondant à deux adresses virtuelles de programmation successives, sont non successives ;
et le module de vérification de contiguïté (3) est adapté pour définir au moins une partie des éléments de programmation (t_{B1}) destinés au contrôleur de DMA, en fonction de ladite adresse physique de programmation et d'au moins le premier sous-bloc identifié ;
- et le système sur puce est adapté pour délivrer au dit contrôleur de DMA par application sur au moins un bus parmi le bus d'adresses (BA) et le bus de données (BD) lesdits éléments de programmation

7. Système sur puce (1) selon la revendication 6, dans lequel :
- le module de vérification de contiguïté (3) est adapté pour déterminer une première adresse virtuelle (VA_SRCO), qui est l'adresse du début de la page virtuelle (P_{S0}) indiquée par l'adresse virtuelle de programmation (VA_SRC) et pour déterminer une valeur de taille (t_{S0}) égale à la taille de la page (P'_{S0}) associée à l'adresse physique de programmation (PA_SRC) fournie par l'unité de gestion de mémoire après traduction de l'adresse virtuelle de programmation ;
et dans lequel l'unité de gestion dé mémoire est adaptée pour délivrer un premier groupe de bits (PPN_{S0}) de l'adresse physique de programmation indiquant ladite page physique (P'_{S0}) et la taille de page associée (tₛ₀) au module de vérification de contiguïté ;
le système sur puce étant agencé de manière à ce que :
a) ledit module de vérification de contiguïté est adapté pour déterminer en fonction du premier groupe de bits une première adresse physique (PA_SRC0) qui est l'adresse du début de la page physique indiquée, pour déterminer une seconde adresse virtuelle (VA_SRC1) égale à la somme de la première adresse virtuelle délivrée et de la première taille de page délivrée et pour fournir ladite seconde adresse virtuelle à l'unité de gestion de mémoire ;
b) l'unité de gestion de mémoire est adaptée pour traduire ladite deuxième adresse virtuelle en une adresse physique correspondante (PA_SRC1), pour déterminer une deuxième valeur de taille (t_{S1}) égale à la taille de la page associée à ladite adresse physique et pour délivrer un second groupe de bits (PPN_{S1}) de l'adresse physique correspondant à la traduction de la deuxième adresse virtuelle et indiquant la page physique (P'_{S1}) associée et la deuxième valeur de taille au module de vérification de contiguïté ;
c) le module de vérification de contiguïté est adapté pour déterminer en fonction du second groupe de bits une seconde adresse physique (PA_SRC1) qui est l'adresse du début de la page physique indiquée (P'_{S1}) pour comparer ladite seconde adresse physique à la somme de la première adresse physique (PA_SRCO) et de la première valeur de taille (tₛ₀) pour détecter au moins une inégalité entre la seconde adresse physique et ladite somme ;
et le module de contiguïté et l'unité de gestion de mémoire sont adaptés pour remplacer la première adresse virtuelle par la seconde adresse virtuelle, la première taille de page par la deuxième taille de page et la première adresse physique par la deuxième adresse physique et pour réitérer le traitement indiqué en a), b) et c) au moins tant que la seconde adresse physique est égale à la somme de la première adresse physique et de la première valeur de taille de page ;
- et le module de vérification de contiguïté est adapté pour, quand une première inégalité est établie indiquant une première discontinuité, constituer un premier sous-bloc (SB_{S1}) d'espace mémoire sans discontinuité compris entre d'une part, l'adresse physique (PA_SRC) obtenue par traduction de l'adresse virtuelle (VA_SRC) de programmation délivrée par lesdites instructions et d'autre part, l'adresse physique égale à la somme, détectée inégale à la seconde adresse physique, de la première adresse physique et de la première valeur de taille de page.

8. Système sur puce (1) selon l'une quelconque des revendications 6 et 7, dans lequel en réponse aux instructions déterminées dédiées d'un programme utilisateur (P) délivrant une première adresse virtuelle de programmation égale à l'adresse virtuelle de source (VA_SRC) et une seconde adresse virtuelle de programmation égale à l'adresse virtuelle de seconde adresse virtuelle de programmation égale à l'adresse virtuelle de destination (VA_DEST) :
- le module de vérification de contiguïté (3) est adapté pour constituer d'une part un premier sous-bloc de source (SB_{S1}) et un premier sous-bloc de destination (SB_{D1}) présentant des tailles de sous-blocs respectives (t_{BS1}, t_{BD1})
- les éléments de programmation fournis au contrôleur de DMA comprennent l'adresse physique de source, l'adresse physique de destination et une taille de transfert (t_{B1}) égale à la taille de sous-bloc la plus petite parmi la taille du sous-bloc de source et la taille du sous-bloc de destination.

9. Système sur puce (1) selon l'une quelconque des revendications 6 à 8, dans lequel le module de vérification de contiguïté (3) est adapté pour envoyer en outre une information au programme utilisateur, ladite information comportant au moins une donnée parmi une localisation dans l'espace mémoire virtuel de la première discontinuité et la taille de transfert délivrée au contrôleur de DMA si ladite taille est différente de la taille fournie par le programme utilisateur.

10. Système sur puce (1) selon l'une quelconque des revendications 6 à 8, dans lequel,
- le module de vérification de contiguïté (3) est adapté pour constituer un groupe de sous-blocs de source, respectivement de destination, chaque sous-bloc étant constitué par un sous-espace mémoire compris entre deux bornes adjacentes de source, respectivement de destination, lesdites bornes de source, respectivement de destination, étant :
- les adresses physiques de source, respectivement de destination, délivrées par le programme utilisateur,
- des adresses physiques déduites des localisations des discontinuités déterminées dans la partie de source (P_{PS}), respectivement de destination (P_{DS}), de l'espace mémoire physique, par le module de discontinuité (3) en fonction d'information (PPN_{Si}, PPN_{Di,} t_{Si}, t_{Di}) fournies par gestion de mémoire, et
- l'adressé physique égale à la traduction par l'unité de gestion de mémoire de la somme de l'adresse virtuelle de source, respectivement de destination, et de la taille (t0) délivrées par le programme utilisateur (P),
chaque sous-bloc étant associé à une adresse physique de début de sous-bloc et à une taille de sous-bloc
- le module de vérification de contiguïté (3) est en outre adapté pour mémoriser dans une page donnée (P_{blocs}) associée à une adresse physique de page, des données déterminées en fonction desdites adresses physiques de début de bloc et des tailles de sous-bloc associées au groupe de sous-blocs de source, respectivement de destination ; et
et dans lequel les éléments de programmation délivrés au dit contrôleur de DMA par application sur les bus d'adresses (BA) et de données (BD) comportent ladite adresse physique de page ;
et le contrôleur de DMA est adapté pour se programmer en fonction des données mémorisées dans ladite page.

## Claims

1. Method for programming a DMA controller in a system on a chip (1) comprising a central processing unit (2), a memory management unit (4) designed to translate a virtual address into a physical address according to a predefined translation table (T) which also contains the size of each page, a hardware module (3) for checking contiguity, a DMA controller (11) linked to an address bus (BA) and to a data bus (BD), said controller being programmable by applying to at least one bus out of the data bus and the address bus, programming elements comprising a source physical address, a destination physical address and a size for the data to be transferred, the system on a chip linking each user program to a virtual address space and to a physical memory space, organized in pages, and such that each address includes high-order bits indicating a page associated with said address, said method comprising the following steps implemented under the control of the central processing unit:
- in response to predefined dedicated instructions (T1, T2, S1, S2) of a user program (P) delivering size information (t0) and a programming virtual address out of a source virtual address and a destination virtual address (VA_SRC, VA_DEST), said programming virtual address is supplied as input to the memory management unit;
- the memory management unit translates the programming virtual address into a corresponding programming physical address (PA_SRC, PA_DEST); and
- at least a first sub-block (SB_{S1}, SB_{D1}) is formed by a memory sub-space without discontinuity identified by a start physical address (PA_SRC0) equal to the programming physical address and an end physical address equal to the physical address immediately preceding a first discontinuity (D_{S1}, D_{D1}) in a part of the physical memory space (P_{PS}, P_{PD}) corresponding, according to the translation table (T), to the part of the virtual address space (P_{VS}, P_{VD}) beginning at the programming virtual address and of a size equal to the size information delivered by the user program (t0), said first discontinuity being determined by the discontinuity module as a function of information (PPN₀, tₛ₀) supplied by the memory management unit and stored in the translation table (T), and being identified where two programming physical addresses corresponding to two successive programming virtual addresses are not sucessive ;
- at least some of the programming elements (t_{B1}) intended for the DMA controller are defined as a function of said programming physical address and at least the first identified sub-block;
- and said programming elements are delivered to said DMA controller by application to at least one bus out of the address bus (BA) and the data bus (BD).

2. Method for programming a DMA controller according to Claim 1, according to which:
- the contiguity checking module (3) determines a first virtual address (VA_SRC0) which is the start address of the virtual page (P_{S0}) indicated by the programming virtual address (VA_SRC);
- a size value (t_{S0}) equal to the size of the page (P'_{S0}) associated with the programming physical address (PA_SRC) supplied by the memory management unit after translation of the programming virtual address is determined; and
- a first group of bits (PPN_{S0}) of the programming physical address indicating said physical page (P'_{S0}) and the associated page size (t_{S0}) are delivered to the contiguity checking module; said procedure also comprising the following steps:
a) said contiguity checking module determines, according to the first group of bits, a first physical address (PA_SRC0) which is the start address of the physical page indicated, determines a second virtual address (VA_SRC1) equal to the sum of the first virtual address delivered and of the first page size delivered and supplies said second virtual address to the memory management unit;
b) the memory management unit translates said second virtual address into a corresponding physical address (PA_SRC1) and determines a second size value (t_{S1}) equal to the size of the page associated with said physical address;
c) a second group of bits (PPN_{S1}) of the physical address corresponding to the translation of the second virtual address and indicating the associated physical page (P'_{S1}) and the second size value are delivered to the contiguity checking module;
d) the contiguity checking module determines, as a function of the second group of bits, a second physical address (PA_SRC1) which is the start address of the physical page indicated (P'_{S1}), compares said second physical address with the sum of the first physical address (PA_SRCO) and the first size value (tₛ₀) to detect at least one inequality between the second physical address and said sum;
and the steps a) to d) are repeated by replacing the first virtual address with the second virtual address, the first page size with the second page size and the first physical address with the second physical address, at least as long as the second physical address is equal to the sum of the first physical address and of the first page size value;
- when a first inequality is established, it indicates a first discontinuity, and the first sub-block (SB_{S1}) is formed by the memory space without discontinuity between, on the one hand, the physical address (PA_SRC) obtained by translation of the programming virtual address (VA_SRC) delivered by said instructions and, on the other hand, the physical address equal to the sum, detected unequal to the second physical address, of the first physical address and of the first page size value.

3. Method for programming a DMA controller according to either of the preceding Claims, according to which, in response to the predefined dedicated instructions of a user program (P) delivering a first programming virtual address equal to the source virtual address (VA_SRC) and a second programming virtual address equal to the destination virtual address (VA_DEST):
- on the one hand a first source sub-block (SB_{S1}) and a first destination sub-block (SB_{D1}) are formed, presenting respective sub-block sizes (t_{BS1}, t_{BD1})
- the programming elements supplied to the DMA controller include the source physical address, the destination physical address and a transfer size (t_{B1}) equal to the smallest sub-block size out of the source sub-block size and the destination sub-block size.

4. Method for programming a DMA controller according to any one of the preceding Claims, according to which information is also sent to the user program, said information including at least one data item out of a location, in the virtual memory space, of the first discontinuity and the transfer size delivered to the DMA controller if said size is different from the size supplied by the user program.

5. Method for programming a DMA controller according to any one of Claims 1 to 3, according to which
- a group of source, respectively of destination, sub-blocks is formed, each sub-block being formed by a memory sub-space between two adjacent source, respectively destination, limits, said source, respectively destination, limits being:
- the source, respectively destination, physical addresses obtained by translation of the source, respectively destination virtual addresses delivered by the user program,
- physical addresses deduced from the locations of the discontinuities determined in the source part (P_{PS}), respectively the destination part (P_{DS}), of the physical memory space, by the discontinuity module (3) as a function of information (PPN_{Si}, PPN_{Di}, t_{Si}, t_{Di}) supplied by the memory management unit, and
- the physical address equal to the translation by the memory management unit of the sum of the source, respectively destination, virtual address, and of the size information (t0) delivered by the user program (P),
each sub-block being associated with a physical sub-block start address and a sub-block size;
- data determined as a function of said physical block start addresses and the sub-block sizes associated with the group of source, respectively destination, sub-blocks is stored in a given page (P_{blocks}) associated with a physical page address; and
- the programming elements delivered to said DMA controller by application to the address bus (BA) and data bus (BD) include said physical page address;
- and the DMA controller is programmed according to the data stored in said page.

6. System on a chip (1) comprising a central processing unit (2), a memory management unit (4) designed to translate a virtual address into a physical address according to a predefined translation table (T) which also contains the size of each page, a hardware contiguity checking module (3), a DMA controller (11) linked to an address bus (BA) and to a data bus (BD), said controller being programmable by applying, to at least one bus out of the data bus and the address bus, programming elements comprising a source physical address, a destination physical address and a size of data to be transferred;
said system on a chip including, for each user program (P), a virtual address space and a physical memory space, organized as pages, and such that each address includes high-order bits indicating a page associated with said address, and in which in response to predefined dedicated instructions (T1, T2, S1, S2) of a user program (P) delivering size information (t0) and a programming virtual address out of a source virtual address and a destination virtual address (VA_SRC, VA_DEST) :
- the memory management unit is designed to translate the programming virtual address into a corresponding programming physical address (PA_SRC, PA_DEST); and
- the hardware contiguity checking module (3) is designed to form at least a first sub-block (SB_{S1}, SB_{D1}) of memory space without discontinuity identified by a start physical address (PA_SRC0) equal to the programming physical address and an end physical address equal to the physical address immediately preceding a first discontinuity (D_{S1}, D_{D1}) in a part of the physical memory space (P_{PS}, P_{PD}) corresponding, according to the translation table (T), to the part of the virtual address space (P_{VS}, P_{VD}) beginning at the programming virtual address and of a size equal to the size information delivered by the user program (t0), said first discontinuity location being determined by the discontinuity module as a function of information (PPN₀, tₛ₀) supplied by the memory management unit and contained in the translation table (T) and being identified where two programming physical addresses corresponding to two successive programming virtual addresses are not sucessive;
and the contiguity checking module (3) is designed to define at least some of the programming elements (t_{B1}) intended for the DMA controller, as a function of said programming physical address and at least the first identified sub-block;
- and the system on a chip is designed to deliver said programming elements to said DMA controller by application to at least one bus out of the address bus (BA) and the data bus (BD).

7. System on a chip (1) according to Claim 6, in which:
- the contiguity checking module (3) is designed to determine a first virtual address (VA_SRC0), which is the start address of the virtual page (P_{S0}) indicated by the programming virtual address (VA_SRC) and to determine a size value (t_{S0}) equal to the size of the page (P'_{S0}) associated with the programming physical address (PA_SRC) supplied by the memory management unit after translation of the programming virtual address;
and in which the memory management unit is designed to deliver a first group of bits (PPN_{S0}) of the programming physical address indicating said physical page (P'_{S0}) and the associated page size (tₛ₀) to the contiguity checking module;
the system on a chip being designed in such a way that:
a) said contiguity checking module is designed to determine, as a function of the first group of bits, a first physical address (PA_SRC0) which is the start address of the physical page indicated, to determine a second virtual address (VA_SRC1) equal to the sum of the first virtual address delivered and of the first page size delivered and to supply said second virtual address to the memory management unit;
b) the memory management unit is designed to translate said second virtual address into a corresponding physical address (PA_SRC1), to determine a second size value (t_{S1}) equal to the size of the page associated with said physical address and to deliver a second group of bits (PPNₛ₁) of the physical address corresponding to the translation of the second virtual address and indicating the associated physical page (P'_{S1}) and the second size value to the contiguity checking module;
c) the contiguity checking module is designed to determine, as a function of the second group of bits, a second physical address (PA_SRC1) which is the start address of the physical page indicated (P'_{S1}) to compare said second physical address with the sum of the first physical address (PA_SRCO) and the first size value (t_{S0}) to detect at least one inequality between the second physical address and said sum;
and the contiguity module and the memory management unit are designed to replace the first virtual address with the second virtual address, the first page size with the second page size and the first physical address with the second physical address, and to repeat the processing indicated in a), b) and c) at least as long as the second physical address is equal to the sum of the first physical address and the first page size value;
- and the contiguity checking module is designed, when a first inequality is established indicating a first discontinuity, to form a first sub-block (SB_{S1}) of memory space without discontinuity between, on the one hand, the physical address (PA_SRC) obtained by translation of the programming virtual address (VA_SRC) delivered by said instructions and, on the other hand, the physical address equal to the sum, detected unequal to the second physical address, of the first physical address and of the first page size value.

8. System on a chip (1) according to either of Claims 6 and 7, in which, in response to the predefined dedicated instructions of a user program (P) delivering a first programming virtual address equal to the source virtual address (VA_SRC) and a second programming virtual address equal to the destination virtual address (VA_DEST):
- the contiguity checking module (3) is designed to form, on the one hand, a first source sub-block (SB_{S1}) and a first destination sub-block (SB_{D1}), presenting respective sub-block sizes (t_{BS1}, t_{BD1});
- the programming elements supplied to the DMA controller include the source physical address, the destination physical address and a transfer size (t_{B1}) equal to the smallest sub-block size out of the source sub-block size and the destination sub-block size.

9. System on a chip (1) according to any one of Claims 6 to 8, in which the contiguity checking module (3) is designed also to send information to the user program, said information including at least one data item out of a location in the virtual memory space of the first discontinuity and the transfer size delivered to the DMA controller if said size is different from the size supplied by the user program.

10. System on a chip (1) according to any one of Claims 6 to 8, in which,
- the contiguity checking module (3) is designed to form a group of source, respectively destination, sub-blocks, each sub-block being formed by a memory sub-space between two adjacent source, respectively destination, limits, said source, respectively destination, limits being:
- the source, respectively destination, physical addresses obtained by translation of the source, respectively destination virtual addresses delivered by the user program,
- physical addresses deduced from the locations of the discontinuities determined in the source part (P_{PS}), respectively the destination part (P_{DS}), of the physical memory space, by the discontinuity module (3) according to information (PPN_{Si}, PPN_{Di}, t_{Si}, t_{Di}) supplied by the memory management unit, and
- the physical address equal to the translation by the memory management unit of the sum of the source, respectively destination, virtual address, and the size (t0) delivered by the user program (P),
each sub-block being associated with a sub-block start physical address and a sub-block size;
- the contiguity checking module (3) is also designed to store, in a given page (P_{blocks}) associated with a physical page address, data determined as a function of said block start physical addresses and the sub-block sizes associated with the group of source, respectively destination, sub-blocks; and
in which the programming elements delivered to said DMA controller by application to the address bus (BA) and data bus (BD) include said physical page address;
and the DMA controller is designed to be programmed according to the data stored in said page.

## Patentansprüche

1. Verfahren zum Programmieren eines DMA-Controllers in einem System auf Chip (1), das eine Zentralverarbeitungseinheit (2), eine Speicherverwaltungseinheit (4), die eine virtuelle Adresse in eine physikalische Adresse gemäß einer bestimmten Übersetzungstabelle (T) übersetzen kann, aufweist, die neben der Größe jeder Seite ein materielles Modul zum Prüfen der Kontiguität (3), einen DMA-Controller (11), der mit einem Adressbus (BA) und einem Datenbus (BD) verbunden ist, aufweist, wobei der Controller durch Anlegen von Programmierelementen, die eine physikalische Quellenadresse, eine physikalische Zieladresse und eine Größe der zu übertragenden Daten aufweisen, auf mindestens den Datenbus oder den Adressbus programmierbar ist, wobei das System auf Chip jedes Benutzerprogramm einem virtuellen Adressierraum und einem physikalischen Speicherraum zuweist, die in Seiten organisiert sind, und derart, dass jede Adresse werthohe Bits enthält, die eine Seite angeben, die der Adresse zugewiesen ist, wobei das Verfahren die folgenden Umsetzungsschritte unter der Steuerung der Zentralverarbeitungseinheit aufweist:
- als Reaktion auf bestimmte dedizierte Anweisungen (T1, T2, S1, S2) eines Benutzerprogramms (P), das eine Größeninformation (t0) und eine virtuelle Programmieradresse aus einer virtuellen Quellenadresse und einer virtuellen Zieladresse (VA_SRC, VA_DEST) liefert, wird die virtuelle Programmieradresse am Eingang der Speicherverwaltungseinheit geliefert,
- die Speicherverwaltungseinheit übersetzt die virtuelle Programmieradresse in eine entsprechende physikalische Programmieradresse (PA_SCR, PA_DEST), und
- mindestens ein erster Unterblock (SB_{S1}, SB_{D1}) besteht aus einem Speicherunterraum ohne Diskontinuität, der von einer physikalischen Anfangsadresse (PA_SCR0) gleich der physikalischen Programmieradresse und einer physikalischen Endadresse gleich der physikalischen Adresse identifiziert wird, die unmittelbar einer ersten Diskontinuität (D_{S1}, D_{D1}) in einem Teil des physikalischen Speicherplatzes (P_{PS}, P_{PD}) vorausgeht, der gemäß der Übersetzungstabelle (T) dem adressierbaren virtuellen Teil des Raums (P_{VS}, P_{VD}) entspricht, der an der virtuellen Programmieradresse anfängt und mit gleicher Größe wie die Information mit der Größe, die von dem Benutzerprogramm (t0) geliefert wird, wobei die erste Diskontinuität durch das Diskontinuitätsmodul in Abhängigkeit von Informationen (PPN₀, ts₀), die von der Speicherverwaltungseinheit geliefert werden und in der Übersetzungstabelle (T) gespeichert sind, bestimmt wird und dort identifiziert ist, wo zwei physikalische Programmieradressen, die zwei aufeinander folgenden virtuellen Programmieradressen entsprechen, nicht aufeinander folgen,
- mindestens ein Teil der Programmierelemente (t_{B1}), die für den DMA-Controller bestimmt sind, wird in Abhängigkeit von der physikalischen Programmieradresse und mindestens dem ersten identifizierten Unterblock definiert,
- und die Programmierelemente werden an den DMA-Controller durch Anlegen auf mindestens den Adressbus (BA) oder den Datenbus (BD) geliefert.

2. Verfahren zum Programmieren eines DMA-Controllers nach Anspruch 1, wobei:
- das Kontiguitätsprüfmodul (3) eine erste virtuelle Adresse (VA_SRCO) bestimmt, die eine Adresse des Anfangs der virtuellen Seite (P_{S0}) ist, die von der virtuellen Programmieradresse (VA_SRC) angezeigt wird,
- ein Größenwert (t_{S0}) gleich der Größe der Seite (P'_{S0}), die der physikalischen Programmieradresse (PA_SRC) zugewiesen ist, die von der Speicherverwaltungseinheit nach der Übersetzung der virtuellen Programmieradresse bestimmt wird, und
- eine erste Gruppe von Bits (PPN_{S0}) der physikalischen Programmieradresse, die die physikalische Seite (P'_{S0}) und die Größe der dazugehörenden Seite (t_{S0}) anzeigen, an das Kontiguitätsprüfmodul gesendet werden,
wobei das Verfahren ferner die folgenden Schritte aufweist:
a) das Kontiguitätsprüfmodul bestimmt in Abhängigkeit von der ersten Gruppe von Bits eine erste physikalische Adresse (PA_SRC0), die die Anfangsadresse der angegebenen physikalischen Seite ist, bestimmt eine zweite virtuelle Adresse (VA_SCR1) gleich der Summe der ersten gelieferten virtuellen Adresse und der ersten gelieferten Seitengröße und liefert die zweite virtuelle Adresse an die Speicherverwaltungseinheit,
b) die Speicherverwaltungseinheit übersetzt die zweite virtuelle Adresse in eine entsprechende physikalische Adresse (PA_SRC1) und bestimmt einen zweiten Größenwert (t_{S1}) gleich der Größe der Seite, die mit der physikalischen Adresse verbunden ist,
c) eine zweite Gruppe von Bits (PPN_{S1}) der physikalischen Adresse, die der Übersetzung der zweiten virtuellen Adresse entspricht und die physikalische Seite (P'_{S1}) anzeigt, die mit dem zweiten Größenwert verbunden ist, werden an das Kontiguitätsprüfmodul geliefert,
d) das Kontiguitätsprüfmodul bestimmt in Abhängigkeit von der zweiten Gruppe von Bits eine zweite physikalische Adresse (PA_SRC1), die die Anfangsadresse der angegebenen physikalischen Seite (P'_{S1},) ist, vergleicht die zweite physikalische Adresse mit der Summe der ersten physikalischen Adresse (PA_SRC0) und dem ersten Größenwert (t_{S0}), um mindestens eine Ungleichheit zwischen der zweiten physikalischen Adresse und der Summe festzustellen;
und die Schritte a) bis d) werden wiederholt, indem die erste virtuelle Adresse durch die zweite virtuelle Adresse ersetzt wird, die erste Seitengröße durch die zweite Seitengröße und die erste physikalische Adresse durch die zweite physikalische Adresse, zumindest so lange wie die zweite physikalische Adresse gleich der Summe der ersten physikalischen Adresse und dem ersten Seitengrößenwert ist,
- wenn eine erste Ungleichheit festgestellt wird, gibt sie eine erste Diskontinuität an, und der erste Unterblock (SB_{S1}) besteht aus dem Speicherraum ohne Diskontinuität, der sich zwischen einerseits der physikalischen Adresse (PA_SRC), die durch Übersetzen der virtuellen Programmieradresse (VA_SRC), die von den Anweisungen geliefert wurde, und andererseits der physikalischen Adresse gleich der Summe liegt, die an der zweiten physikalischen Adresse, der ersten physikalischen Adresse und dem ersten Seitengrößenwert als ungleich erkannt wurde.

3. Verfahren zum Programmieren eines DMA-Controllers nach einem der vorhergehenden Ansprüche, gemäß welchem man als Reaktion auf die bestimmten dedizierten Anweisungen eines Benutzerprogramms (P), das eine erste virtuelle Programmieradresse gleich der virtuellen Quellenadresse (VA_SRC) und eine zweite virtuelle Programmieradresse gleich der virtuellen Zieladresse (VA_DEST) liefert:
- einerseits einen ersten Quellenunterblock (SB_{S1}) und einen ersten Zielunterblock (SB_{D1}) bildet, die jeweilige Unterblockgrößen (t_{BS1}, t_{BD1}) aufweisen,
- die Programmierelemente, die an den DMA-Controller geliefert wurden, die physikalische Quellenadresse, die physikalische Zieladresse und eine Übertragungsgröße (t_{B1}), die gleich der kleineren aus Quellenunterblockgröße und Zielunterblockgröße ist, umfassen.

4. Verfahren zum Programmieren eines DMA-Controllers nach einem der vorhergehenden Ansprüche, bei dem eine Information ferner an das Benutzerprogramm gesendet wird, wobei die Information mindestens ein Datum der Lage im virtuellen Speicherraum der ersten Diskontinuität oder eine Transfergröße aufweist, die an den DMA-Controller geliefert wird, wenn die Größe von der von dem Benutzerprogramm gelieferten Größe unterschiedlich ist.

5. Verfahren zum Programmieren eines DMA-Controllers nach einem der Ansprüche 1 bis 3, bei dem
- man eine Gruppe aus Quellenunterblöcken und Quellenzielblöcken bildet, wobei jeder Unterblock aus einem Unterspeicherraum besteht, der jeweils zwischen einer benachbarten Quellengrenze und Zielgrenze liegt, wobei die Quellengrenze und die Zielgrenze Folgendes sind:
- die physikalischen Quellen- und Zieladressen, die von dem Benutzerprogramm geliefert werden,
- physikalische Adressen, die von den Lagen der Diskontinuitäten abgeleitet werden, die in dem Quellenteil (P_{PS}) und dem Zielteil (P_{DS}) des physikalischen Speicherraums, durch das Diskontinuitätsmodul (3) in Abhängigkeit von Informationen (PPN_{SI}, PPN_{DI}, t_{SI}, t_{DI}), die von der Speicherverwaltungseinheit geliefert werden, bestimmt werden und
- die physikalische Adresse gleich der Übersetzung durch die Speicherverwaltungseinheit der Summe der virtuellen Quellenadresse und Zieladresse und der Größeninformation (t0), die von dem Benutzerprogramm (P) geliefert werden,
wobei jeder Unterblock mit einer physikalischen Unterblockanfangsadresse und einer Unterblockgröße verbunden ist,
- man in einer gegebenen Seite (P_{Blöcke}), die einer physikalischen Seitenadresse zugewiesen ist, Daten, die in Abhängigkeit von den physikalischen Blockanfangsadressen und Unterblockgrößen, die jeweils der Quellen- und Zielunterblockgruppe zugewiesen sind, bestimmt werden, speichert und
- die an den DMA-Controller gelieferten Programmierelemente durch Anlegen auf den Adressbus (BA) und Datenbus (BD) die physikalische Seitenadresse enthalten,
- und der DMA-Controller in Abhängigkeit von den in der Seite gespeicherten Daten programmiert wird.

6. System auf Chip (1), das eine zentrale Verarbeitungseinheit (2), eine Speicherverwaltungseinheit (4), die eine virtuelle Adresse in eine physikalische Adresse gemäß einer bestimmten Übersetzungstabelle (T) übersetzen kann, die ferner die Größe jeder Seite enthält, ein materielles Kontiguitätsprüfmodul (3), einen DMA-Controller (11), der mit einem Adressbus (BA) und einem Datenbus (BD) verbunden ist, aufweist, wobei der Controller durch Anlegen von Programmierelementen auf mindestens den Datenbus oder den Adressbus programmierbar ist, die eine physikalische Quellenadresse, eine physikalische Zieladresse und eine Größe der zu übertragenden Daten enthalten,
wobei das System auf Chip für jedes Benutzerprogramm (P) einen virtuellen Adressierraum und einen physikalischen Speicherraum aufweist, die in Seiten organisiert sind, und derart, dass jede Adresse werthohe Bits enthält, die eine Seite anzeigen, die der Adresse zugewiesen ist, und bei dem als Reaktion auf bestimmte dedizierte Anweisungen (T1, T2, S1, S2) eines Benutzerprogramms (P), das eine Größeninformation (t0) oder eine virtuelle Programmieradresse, nämlich eine virtuelle Quellenadresse und eine virtuelle Zieladresse (VA_SRC, VA_DEST) liefert:
- die Speicherverwaltungseinheit die virtuelle Programmieradresse in eine entsprechende physikalische Programmieradresse (PA_SRC, PA_DEST) übersetzen kann, und
- das materielle Kontiguitätsprüfmodul (3) mindestens einen ersten Speicherraumunterblock ohne Diskontinuität (SB_{S1}, SB_{D1}), der von einer physikalischen Anfangsadresse (PA_SRC0) identifiziert wird, die gleich der physikalischen Programmieradresse ist, und einer physikalischen Endadresse gleich der physikalischen Adresse, die einer ersten Diskontinuität (D_{S1}, D_{D1}) in einem Teil des physikalischen Speicherraums (PPS, PPD) vorausgeht, der gemäß der Übersetzungstabelle (T) dem Teil des virtuellen adressierbaren Raums (PV_{S}, P_{VD}) entspricht, der an der virtuellen Programmieradresse beginnt und mit gleicher Größe wie die Größeninformation, die von dem Benutzerprogramm (t0) geliefert wird, bilden kann, wobei die erste Diskontinuitätslage von dem Diskontinuitätsmodul in Abhängigkeit von Informationen (PPN₀, tₛ₀) bestimmt wird, die von der Speicherverwaltungseinheit geliefert werden und in der Übersetzungstabelle (T) enthalten sind und da identifiziert wird, wo zwei physikalische Programmieradressen, die zwei aufeinander folgenden virtuellen Programmieradressen entsprechen, nicht aufeinander folgend sind, und das Kontiguitätsprüfmodul (3) mindestens einen Teil der Programmierelemente (t_{B1}), die für den DMA-Controller bestimmt ist, in Abhängigkeit von der physikalischen Programmieradresse und mindestens dem ersten identifizierten Unterblock definieren kann,
- und das System auf Chip dem DMA-Controller durch Anlegen auf mindestens den Adressbus (BA) oder den Datenbus (BD) die Programmierelemente liefern kann.

7. System auf Chip (1) nach Anspruch 6, bei dem:
- das Kontiguitätsprüfmodul (3) eine erste virtuelle Adresse (VA_SCR0) bestimmen kann, die die Anfangsadresse der virtuellen Seite (P_{S0}) ist, die von der virtuellen Programmieradresse (VA_SRC) angegeben ist, und einen Größenwert (t_{S0}) gleich der Größe der Seite (P'_{S0}) bestimmen kann, die der physikalischen Programmieradresse (PA_SRC) zugewiesen ist, die von der Speicherverwaltungseinheit nach der Übersetzung der virtuellen Programmieradresse geliefert wird,
und bei dem die Speicherverwaltungseinheit eine erste Gruppe von Bits (PPN_{S0}) der physikalischen Programmieradresse liefern kann, die die physikalische Seite (P'_{S0}) und die Größe der dazugehörenden Seite (t_{S0}) dem Kontiguitätsprüfmodul anzeigen kann,
wobei das System auf Chip derart eingerichtet ist:
a) dass das Kontiguitätsprüfmodul in Abhängigkeit von der ersten Gruppe von Bits eine erste physikalische Adresse (PA_SRC0) bestimmen kann, die die Anfangsadresse der angegebenen physikalischen Seite ist, und eine zweite virtuelle Adresse (VA SRC1) gleich der Summe der ersten gelieferten virtuellen Adresse und der ersten gelieferten Seitengröße bestimmen kann, und die zweite virtuelle Adresse zu der Speicherverwaltungseinheit liefern kann,
b) dass die Speicherverwaltungseinheit die zweite virtuelle Adresse in eine entsprechende physikalische Adresse (PA_SRC1) übersetzen kann, um einen zweiten Größenwert (t_{S1}) gleich der Größe der Seite zu bestimmen, die der physikalischen Adresse zugewiesen ist, und eine zweite Gruppe von Bits (PPN_{S1}) der physikalischen Adresse liefern kann, die der Übersetzung der zweiten virtuellen Adresse entspricht und die dazugehörende physikalische Seite (P'_{S1}) und dem Kontiguitätsprüfmodul den zweiten Größenwert anzeigt,
c) dass das Kontiguitätsprüfmodul in Abhängigkeit von der zweiten Gruppe von Bits eine zweite physikalische Adresse (PA_SRC1) bestimmen kann, die die Anfangsadresse der angegebenen physikalischen Seite (P'_{S1}) ist, um die zweite physikalische Adresse mit der Summe der ersten physikalischen Adresse (PA_SRC0) und dem ersten Größenwert (t_{S0}) zu vergleichen, um mindestens eine Ungleichheit zwischen der zweiten physikalischen Adresse und der Summe zu erfassen,
und wobei das Kontiguitätsmodul und die Speicherverwaltungseinheit die erste virtuelle Adresse durch die zweite virtuelle Adresse, die erste Seitengröße durch die zweite Seitengröße und die erste physikalische Adresse durch die zweite physikalische Adresse ersetzen können, und die in a), b) und c) angegebene Verarbeitung mindestens so lange wiederholen können, wie die zweite physikalische Adresse gleich der Summe der ersten physikalischen Adresse und des ersten Seitengrößenwerts ist,
- und dass das Kontiguitätsprüfmodul, wenn eine erste Ungleichheit erkannt wird, die eine erste Diskontinuität anzeigt, einen ersten Speicherraumunterblock (SB_{S1}) ohne Diskontinuität bilden kann, der zwischen einerseits der physikalischen Adresse (PA_SRC), die durch Übersetzen virtuellen Programmieradresse (VA_SRC), die von den Anweisungen geliefert wird, erzielt wird, und andererseits der physikalischen Adresse enthalten ist, die gleich der Summe ist, die an der zweite physikalischen Adresse gleich der Summe liegt, die an der zweiten physikalischen Adresse, der ersten physikalischen Adresse und dem ersten Seitengrößenwert als ungleich erfasst wurde.

8. System auf Chip (1) nach einem der Ansprüche 6 und 7, bei dem als Reaktion auf die dedizierten bestimmten Anweisungen eines Benutzerprogramms (P), das eine erste virtuelle Programmieradresse gleich der virtuellen Quellenadresse (VA_SRC) und eine zweite virtuelle Programmieradresse gleich der virtuellen Zieladresse (VA_DEST) liefert:
- das Kontiguitätsprüfmodul (3) einerseits einen ersten Quellenunterblock (SB_{S1}) und einen ersten Zielunterblock (SB_{D1}) bilden kann, die jeweilige Unterblockgrößen (t_{BS1}, t_{BSD1}) aufweisen,
- die dem DMA-Controller gelieferten Programmierelemente, die physikalische Quellenadresse, die physikalische Zieladresse und eine Transfergröße (t_{B1}) gleich der Größe des Unterblocks aufweisen, der zwischen der Größe des Quellenunterblocks und der Größe des Zielunterblocks der kleinere ist.

9. System auf Chip (1) nach einem der Ansprüche 6 bis 8, bei dem das Kontiguitätsprüfmodul (3) ferner eine Information an das Benutzerprogramm senden kann, wobei die Information mindestens ein Datum enthält, das die Lage der ersten Diskontinuität in dem virtuellen Speicherraum oder die Transfergröße ist, die dem DMA-Controller geliefert wird, wenn die Größe von der Größe unterschiedlich ist, die von dem Benutzerprogramm geliefert wird.

10. System auf Chip (1) nach einem der Ansprüche 6 bis 8, bei dem
- das Kontiguitätsprüfmodul jeweils eine Gruppe Quellenunterblöcke und Zielunterblöcke bilden kann, wobei jeder Unterblock aus einem Speicherunterraum besteht, der zwischen zwei benachbarten Quellengrenzen liegt, jeweils einer Quellen- und einer Zielgrenze, wobei die Quellengrenze und die Zielgrenze jeweils wie folgt sind:
- die physikalische Quellenadresse und Zieladresse, die von dem Benutzerprogramm geliefert werden,
- physikalische Adressen, die aus den Lagen der Diskontinuitäten abgeleitet werden, die in dem Quellenteil (P_{PS}) und dem Zielteil (P_{DS}) des physikalischen Speicherraums von dem Diskontinuitätsmodul (3) in Abhängigkeit von Informationen (PPN_{SI}, PPN_{DI}, t_{SI}, t_{DI}) die von der Speicherverwaltungseinheit geliefert wurden, bestimmt werden, und
- die physikalische Adresse gleich der Übersetzung durch die Speicherverwaltungseinheit der Summe der virtuellen Quellenadresse und Zieladresse und der Größe (t0), die von dem Benutzerprogramm (P) geliefert werden,
wobei jedem Unterblock eine physikalische Unterblockanfangsadresse und einer Unterblockgröße zugewiesen ist,
- wobei das Kontiguitätsprüfmodul (3) ferner in einer gegebenen Seite (P_{Blöcke}), die einer physikalischen Seitenadresse zugewiesen ist, Daten speichern kann, die in Abhängigkeit von den physikalischen Blockanfangsadressen und Unterblockgrößen bestimmt werden, die jeweils der Gruppe von Quellenunterblöcken und Zielunterblöcken zugewiesen sind, und
wobei die an den DMA-Controller durch Anlegen auf den Adressbus (BA) und Datenbus (BD) gelieferten Programmierelemente die physikalische Seitenadresse enthalten,
und sich der DMA-Controller in Abhängigkeit von den in der Seite gespeicherten Daten programmieren kann.
